# EUROPÄISCHE PATENTSCHRIFT

(11) **EP 3 802 384 B1**
(45) Veröffentlichungstag und Bekanntmachung des Hinweises auf die Patenterteilung: **27.07.2022**
(21) Anmeldenummer: 19725750.4
(22) Anmeldetag: 27.05.2019
(51) Int. Cl.: H02K 41/02, B65G 54/02, B65G 43/08, B61L 3/00, B61L 25/02

(54) **VERFAHREN ZUM STEUERN EINER TRANSPORTEINHEIT EINER TRANSPORTEINRICHTUNG IN FORM EINES LANGSTATORLINEARMOTORS**
METHOD FOR CONTROLLING A TRANSPORT UNIT OF A TRANSPORT DEVICE IN THE FORM OF A LONG-STATOR LINEAR MOTOR
PROCÉDÉ POUR LA COMMANDE D'UNE UNITÉ DE TRANSPORT D'UN DISPOSITIF DE TRANSPORT SOUS LA FORME D'UN MOTEUR LINÉAIRE À STATOR LONG

(30) Priorität: 30.05.2018 EP 18175125
(43) Veröffentlichungstag der Anmeldung: 14.04.2021
(73) Patentinhaber: B&R Industrial Automation GmbH, 5142 Eggelsberg (AT)
(72) Erfinder: HUBER, Stefan, 5142 Eggelsberg (AT); REICHENWALLNER, Benjamin, 5142 Eggelsberg (AT)
(74) Vertreter: Patentanwälte Pinter & Weiss OG
(86) Internationale Anmeldenummer: PCT/EP2019/063600
(87) Internationale Veröffentlichungsnummer: WO 2019/228955

(56) Entgegenhaltungen:
- EP-A1- 2 998 229
- EP-A1- 3 061 576
- DE-A1- 3 544 201
- DE-A1-102012 025 326
- DE-A1-102014 117 150
- JP-A- H10 244 481
- US-A1- 2014 142 792

## Beschreibung

Die Erfindung betrifft ein Verfahren zum Steuern einer Transporteinheit einer Transporteinrichtung in Form eines Langstatorlinearmotors in Bewegungsrichtung entlang einer Transportstrecke der Transporteinrichtung, wobei einer Steuerungseinheit ein Bewegungsprofil der Transporteinheit für einen definierten Referenzpunkt der Transporteinheit vorgegeben wird, mit dem die Transporteinheit entlang der Transportstrecke bewegt wird. Die Erfindung betrifft weiters eine Transporteinrichtung in Form eines Langstatorlinearmotors mit einer Transportstrecke, zumindest einer in Längsrichtung entlang der Transportstrecke bewegbaren Transporteinheit und einer Steuerungseinheit zum Steuern der Transporteinheit, wobei in der Steuerungseinheit zur Steuerung der Bewegung der Transporteinheit entlang der Transportstrecke ein Bewegungsprofil der Transporteinheit für einen definierten Referenzpunkt der Transporteinheit vorgesehen ist.

In so gut wie allen modernen Produktionsanlagen ist es erforderlich, Bauteile oder Komponenten, auch über längere Transportstrecken hinweg, mit Transporteinrichtungen zwischen einzelnen Handhabungs- oder Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Ein Langstatorlinearmotor zeichnet sich insbesondere durch eine bessere und flexiblere Ausnützung über den gesamten Arbeitsbereich der Bewegung (Position, Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

Ein Langstatorlinearmotor besteht bekanntermaßen im Wesentlichen aus einem Langstator in Form einer Vielzahl hintereinander angeordneter Antriebsspulen und einer Vielzahl von Transporteinheiten mit Antriebsmagneten (Permanent- oder Elektromagnete), die entlang des Langstators bewegt werden, indem die Antriebsspulen entsprechend mit einem elektrischen Strom beaufschlagt werden. Durch die Antriebsspulen wird ein bewegtes Magnetfeld erzeugt, das mit den Erregungsmagneten an den Transporteinheiten zusammenwirkt, um die Transporteinheiten zu bewegen. Durch den Langstator wird somit eine Förderstrecke ausgebildet, entlang der die Transporteinheiten bewegt werden können. Damit ist es möglich, jede Transporteinheit einzeln und unabhängig voneinander in ihrer Bewegung (Position, Geschwindigkeit, Beschleunigung) zu regeln. Dazu wird jede Antriebsspule durch einen zugeordneten Antriebsspulenregler angesteuert, der Vorgaben zur Bewegung einer Transporteinheit (z.B. in Form von Sollwerten für Position oder Geschwindigkeit) von einer übergeordneten Anlagensteuereinheit erhalten kann. Dabei können entlang der Förderstrecke auch Weichen des Langstatorlinearmotors vorgesehen sein. Oftmals ist der Langstator auch in Form von Fördersegmenten aufgebaut, wobei jedes Fördersegment einen Teil der Förderstrecke bildet und eine Anzahl von Antriebsspulen enthält. Meistens ist für ein Fördersegment ein Segmentregler vorgesehen, der alle Antriebsspulen des Fördersegments regelt. Die konstruktive Ausgestaltung des Langstatorlinearmotors, also z.B. die Ausführung der Antriebsspulen, der Förderstrecke, der Transporteinheiten, der Führungen der Transporteinheit usw., und das Regelungskonzept können natürlich verschieden sein, wobei das grundlegende Funktionsprinzip eines Langstatorlinearmotors aber gleich bleibt.

Aus dem Dokument US 2014/0142792 A1 sind ein Verfahren nach dem Oberbegriff des Anspruchs 1 und eine Vorrichtung nach dem Oberbegriff des Anspruchs 9 bekannt. Insbesondere, offenbart das Dokument eine Transporteinrichtung in Form eines Langstatorlinearmotors und ein Verfahren zur Steuerung einer Transporteinheit entlang einer Transportstrecke. Es wird ein Positionsmesssystem mit seitlich an der Transporteinheit vorgesehenen Messmagneten vorgeschlagen, um die Position der Transporteinheit entlang der Transportstrecke zu messen. Wenn die Messsensoren die Position von Messmagneten messen, die seitlich von den Antriebsmagneten angeordnet sind, stimmt die gemessene Position in der Kurve nicht mit der Position des Mittelpunkts der Transporteinheit überein, welche zur Regelung der Transporteinheit verwendet wird. Für eine genaue Positionsbestimmung wird diese Abweichung in einer Steuerungseinheit berücksichtigt.

Die DE 10 2012 025 326 A1 offenbart ein Verfahren zum Betreiben einer Transporteinrichtung in Form eines Langstatorlinearmotors. Über eine übergeordnete Steuerungseinrichtung wird ein gewünschter Bewegungsablauf für einen Wagen entlang einer Bewegungsbahn vorgegeben. Die Transporteinrichtung weist Wegmesssysteme auf, um die Position der Wagen zu bestimmen. Die übergeordnete Steuerungseinrichtung weist jedem Wagen ein bestimmtes Ablaufprogramm zu. Es wird kein dynamischer Bewegungsablauf und dessen Auswirkung auf die Wagen oder das beförderte Gut beschrieben.

Die EP 3 061 576 A1 offenbart ein Verfahren zum Bereitstellen eines Bewegungsprofils für eine Handhabungseinrichtung, die Antriebe in Form von Linearmotoren umfassen kann. JP H10 244481 A offenbart ein Verfahren zur Bewegungssteuerung eines 6-achsigen Roboters, der mittels eines Linearantriebs entlang einer redundanten 7.Achse bewegbar ist. DE 35 44 201 A1 offenbart keine gattungsgemäße Transporteinrichtung in Form eines LLM, sondern eine Transporteinrichtung, bei der Transporteinheiten an mehreren Punkten intermittierend angetrieben werden und dazwischen durch Trägheit bewegt werden.

In der Regel erfolgt die Planung des Bewegungsablaufs der Transporteinheit(en) entlang einer vorgegebenen Transportstrecke und z.B. in Abhängigkeit eines vorgegebenen oder gewünschten zeitlichen Prozessablaufs eines Produktionsprozesses, indem beispielsweise ein Geschwindigkeitsverlauf der Transporteinheit entlang der Transportstrecke festgelegt wird. Man spricht hier auch von einer eindimensionalen Planung in Bewegungsrichtung entlang der vorgegebenen Transportstrecke, d.h. es ist nur die Position bzw. der zurückgelegte Weg der Transporteinheit in Bewegungsrichtung relevant, nicht die räumliche Geometrie der Transportstrecke (Kurven, etc.). Beispielsweise können entlang der Transportstrecke Arbeitsstationen angeordnet sein, die von der Transporteinheit in einem bestimmten zeitlichen Ablauf durchfahren werden, um z.B. ein von der Transporteinheit transportiertes Objekt zu bearbeiten. Dies kann z.B. eine Befüllung von Flaschen oder Behältern mit einer bestimmten Substanz sein, ein Lackiervorgang, ein Montageschritt oder eine mechanische Bearbeitung, etc. Der Bewegungsablauf kann dabei je nach Anforderung ein kontinuierliches Bewegungsprofil sein, z.B. eine über die Transportstrecke konstante Geschwindigkeit oder auch ein taktweise vorgegebenes Bewegungsprofil, bei dem z.B. die Transporteinheit in einer Arbeitsstation eine gewisse Zeit verweilt. Entlang der Transportstrecke kann es auch Abschnitte mit vorgegebenen kinematischen Grenzen geben, die von einer Transporteinheit nicht verletzt werden dürfen, beispielsweise eine maximale Geschwindigkeit in einer Kurve, um eine maximale Fliehkraft nicht zu überschreiten, oder eine maximale Beschleunigung. Die kinematischen Grenzen begrenzen damit in der Regel die der Transporteinheit maximal vorzugebenden Bewegungsgrößen, um zu gewährleisten, dass ein geplantes Bewegungsprofil auch tatsächlich von der Transporteinheit realisierbar ist.

Das Festlegen des Bewegungsprofils einer Transporteinheit erfolgt dabei für einen vorgegebenen Punkt der Transporteinheit, beispielsweise für einen definierten Shuttle-Center-Point, in Bewegungsrichtung entlang der Transportstrecke. Da das mit der Transporteinheit transportierte Objekt in der Regel starr mit der Transporteinheit verbunden ist, wird damit auch die Bewegung des Objekts mitgeplant.

Diese Art der Planung des Bewegungsprofils der Transporteinheit kann allerdings bei manchen Anwendungen zu Problemen führen. Dies ist z.B. dann der Fall, wenn das Objekt an der Transporteinheit durch die Bewegung andere kinematische Bedingungen erfährt als der Punkt der Transporteinheit, für den die Bewegung geplant wurde. Beispielsweise könnte das Objekt nicht zentral oder in einem bestimmten geometrischen Bezug auf der Transporteinheit angeordnet sein, womit das Objekt beispielsweise in einer Kurve andere Fliehkräfte, Beschleunigungen, Geschwindigkeiten erfährt als der Punkt, für den die Bewegung geplant wurde. Das kann insbesondere dann ein Problem sein, wenn mit der Transporteinheit sensible Güter transportiert werden, beispielsweise Chemikalien, heiße Flüssigkeiten etc. und/oder wenn an der Transporteinheit Vorrichtungen oder Werkzeuge angeordnet sind, mit denen bestimmten Handlungen durchzuführen sind. In solchen Fällen kann es selbst unter Einhaltung der kinematischen Grenzen für den Shuttle-Center-Point der Transporteinheit zu kritischen Bewegungszuständen eines bestimmten mit der Transporteinheit bewegten Referenzpunktes kommen, was nachteilig ist. Auch die umgekehrte Variante kann nachteilig sein, nämlich dann, wenn das Bewegungsprofil für den Shuttle-Center-Point unter Einhaltung kinematischer Grenzen der Transporteinheit geplant wird, sich aber aufgrund einer Bewegung des Objektes während der Bewegung der Transporteinheit die auf die Transporteinheit wirkenden Kräfte verändern.

Es ist deshalb eine Aufgabe der Erfindung, ein Verfahren zum Steuern einer Transporteinheit einer Transporteinrichtung in Form eines Langstatorlinearmotors anzugeben, mit dem die Sicherheit des Betriebs der Transporteinrichtung erhöht werden kann.

Erfindungsgemäß wird die Aufgabe mit dem eingangs genannten Verfahren dadurch gelöst, dass der Steuerungseinheit für einen mit der Transporteinheit verbundenen und vom Referenzpunkt der Transporteinheit beabstandeten Relativpunkt mit einer bekannten Relativposition relativ zum Referenzpunkt der Transporteinheit zumindest abschnittsweise entlang der Transportstrecke ein Relativbewegungsprofil vorgegeben wird und dass die Steuerungseinheit das Bewegungsprofil der Transporteinheit aus dem Relativbewegungsprofil des Relativpunktes ermittelt, wobei der Relativpunkt starr mit der Transporteinheit verbunden wird oder eine den Relativpunkt aufweisende Koppelvorrichtung an der Transporteinheit vorgesehen wird, die eine Kinematik mit zumindest einem Bewegungsfreiheitsgrad für den Relativpunkt aufweist, wobei für den Relativpunkt zumindest ein Relativpunkt-Zielwert festgelegt wird, wobei die Steuerungseinheit das Bewegungsprofil der Transporteinheit so festlegt, dass der Relativpunkt-Zielwert eingehalten wird, wobei als Relativpunkt-Zielwert eine Maximalgeschwindigkeit und/oder eine Maximalbeschleunigung und/oder eine maximale Relativpunkt-Zentrifugalkraft des Relativpunktes und/oder ein vorgegebener Bezugsabstand von einem beweglichen oder ortsfesten Bezugspunkt im Raum festgelegt wird. Dadurch wird bei der Planung des Bewegungsablaufs der Transporteinheit der Umstand berücksichtigt, dass sich die Bewegungsgrößen der Transporteinheit und eines an der Transporteinheit angeordneten Objektes unterscheiden können, was insbesondere in Kurven der Fall sein kann, in denen der Relativpunkt z.B. eine höhere Umfangsgeschwindigkeit aufweisen kann als der Referenzpunkt der Transporteinheit. Durch die Berücksichtigung des Relativpunkt-Zielwerts können unzulässig hohe auf den Relativpunkt, z.B. auf ein Objekt, wirkende Belastungen zuverlässig vermieden werden. Dabei kann das Bewegungsprofil der Transporteinheit entweder in Abhängigkeit eines Bewegungsprofils des Relativpunktes neu ermittelt oder entsprechend angepasst werden.

Vorzugsweise wird die Relativposition des Relativpunktes im Raum relativ zum Referenzpunkt der Transporteinheit während der Bewegung der Transporteinheit durch die Kinematik verändert. Dadurch ist es möglich, dass der Relativpunkt, der z.B. an einem Objekt angeordnet ist, während der Bewegung der Transporteinheit räumlich verändert wird und das Bewegungsprofil der Transporteinheit an den veränderten Relativabstand angepasst wird. Dies kann z.B. offline geplant werden, wenn der Bewegungsablauf des Referenzpunktes bekannt ist, könnte aber auch online in Echtzeit während der Bewegung der Transporteinheit geplant werden. Dadurch können starre oder flexible Konstruktionen an der Transporteinheit angeordnet werden, welche den Relativpunkt aufweisen, und der Relativpunkt, der z.B. an einem Objekt angeordnet ist, kann während der Bewegung der Transporteinheit seine Position verändern.

Es ist vorteilhaft, wenn an der Koppelvorrichtung vorzugsweise zumindest ein Halteelement zum Halten eines Objektes angeordnet wird, wobei der Relativpunkt am Halteelement oder am Objekt vorgesehen wird. Damit können Objekte wie z.B. zu bearbeitende, zu montierende oder zu transportierende Bauteile gehalten werden und der Relativpunkt kann am Objekt festgelegt werden. Das Bewegungsprofil der Transporteinheit kann dann in Abhängigkeit des Relativpunktes des am Halteelement gehaltenen Objektes festgelegt werden.

Als Bewegungsprofil der Transporteinheit und/oder als Bewegungsprofil des Relativpunktes wird vorzugsweise ein Weg-Zeit-Profil oder eine zeitliche Ableitung davon vorgesehen. Dadurch kann beispielsweise auch ein Profil der Geschwindigkeit, des Rucks oder des Stoßes der Transporteinheit und/oder des Relativpunktes verwendet werden.

Vorteilhafterweise wird für den Referenzpunkt der Transporteinheit zumindest ein Transporteinheits-Zielwert vorgegeben, wobei das Bewegungsprofil so festgelegt wird, dass der Transporteinheits-Zielwert eingehalten wird. Als Transporteinheits-Zielwert wird dabei vorzugsweise eine maximale Transporteinheits-Geschwindigkeit und/oder eine maximale Transporteinheits-Beschleunigung des Referenzpunktes in Bewegungsrichtung der Transporteinheit und/oder quer dazu festgelegt und/oder es wird eine auf die Transporteinheit wirkende Maximalkraft, vorzugsweise eine Maximal-Zentrifugalkraft, und/oder ein Maximaldrehmoment festgelegt und/oder es wird ein vorgegebener Transporteinheitsabstand des Referenzpunktes der Transporteinheit von einem zweiten Referenzpunkt einer zweiten Transporteinheit in Bewegungsrichtung oder im Raum festgelegt. Dadurch können unzulässig hohe auf die Transporteinheit wirkende Belastungen vermieden werden und es können beispielsweise vorgegebene Abstände zu vor oder hinter der Transporteinheit bewegten Transporteinheiten eingehalten werden.

Vorteilhafterweise wird als beweglicher Bezugspunkt ein zweiter Relativpunkt oder ein zweiter Referenzpunkt einer zweiten Transporteinheit verwendet. Dadurch können Abstände zwischen Relativpunkten mehrerer auf der Transportstrecke bewegter Transporteinheiten eingehalten werden, beispielsweise ein konstanter Abstand zwischen zwei Objekten zweier hintereinander bewegten Transporteinheiten.

Gemäß einer weiteren bevorzugten Ausführungsform wird als Relativpunkt-Zielwert des Relativpunktes der Transporteinheit eine zwischen dem Relativpunkt der Transporteinheit und einem zweiten Relativpunkt einer zweiten Transporteinheit wirkende Relativkraft vorgegeben und das Bewegungsprofil der Transporteinheit und/oder das Bewegungsprofil der zweiten Transporteinheit wird so festgelegt, dass die zwischen den Relativpunkten wirkende Relativkraft eingehalten wird. Dadurch ist es beispielsweise möglich mit einem an der Transporteinheit angeordneten Objekt eine bestimmte vorgegebene Kraft auf ein mit der zweiten Transporteinheit bewegtes Objekt auszuüben.

Die Aufgabe wird weiters mit einer Transporteinrichtung der eingangs genannten Art gelöst, wobei an der Transporteinheit ein mit der Transporteinheit verbundener und vom Referenzpunkt der Transporteinheit beabstandeter Relativpunkt mit einer bekannten Relativposition relativ zum Referenzpunkt der Transporteinheit vorgesehen ist, dass in der Steuerungseinheit zumindest abschnittsweise entlang der Transportstrecke ein Relativbewegungsprofil des Relativpunktes vorgegeben ist und dass die Steuerungseinheit vorgesehen ist, das Bewegungsprofil der Transporteinheit aus dem Relativbewegungsprofil des Relativpunktes zu ermitteln, wobei der Relativpunkt starr mit der Transporteinheit verbunden ist oder eine den Relativpunkt aufweisende Koppelvorrichtung an der Transporteinheit vorgesehen ist, die eine Kinematik mit zumindest einem Bewegungsfreiheitsgrad für den Relativpunkt aufweist, wobei in der Steuerungseinheit für den Relativpunkt zumindest einen Relativpunkt-Zielwert vorgegeben ist, wobei die Steuerungseinheit vorgesehen ist, das Bewegungsprofil der Transporteinheit so festzulegen, um den Relativpunkt-Zielwert einzuhalten, wobei als Relativpunkt-Zielwert eine Maximalgeschwindigkeit und/oder eine Maximalbeschleunigung und/oder eine maximale Relativpunkt-Zentrifugalkraft des Relativpunktes und/oder ein vorgegebener Bezugsabstand von einem beweglichen oder ortsfesten Bezugspunkt im Raum vorgegeben ist.

Vorteilhafte Ausgestaltungen der Transporteinrichtung sind in den abhängigen Ansprüchen 10-15 angegeben.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 eine erfindungsgemäße Transporteinrichtung in Form eines Langstatorlinearmotors mit Geschwindigkeitsverläufen des Referenz- und Relativpunktes,
Fig.2 eine Transporteinheit mit einer starren Koppelvorrichtung,
Fig.3 eine Transporteinheit mit einer Koppelvorrichtung in Form eines Roboters,
Fig.4 eine Transporteinrichtung in Doppelkammausführung in einer Schnittdarstellung und einer isometrischen Ansicht,
Fig.5 eine erfindungsgemäße Transporteinrichtung mit Kräfteverhältnissen an der Transporteinheit in einer Draufsicht und einer Seitenansicht,
Fig.6 einen Ausschnitt einer Transportstrecke mit mehreren Transporteinheiten.

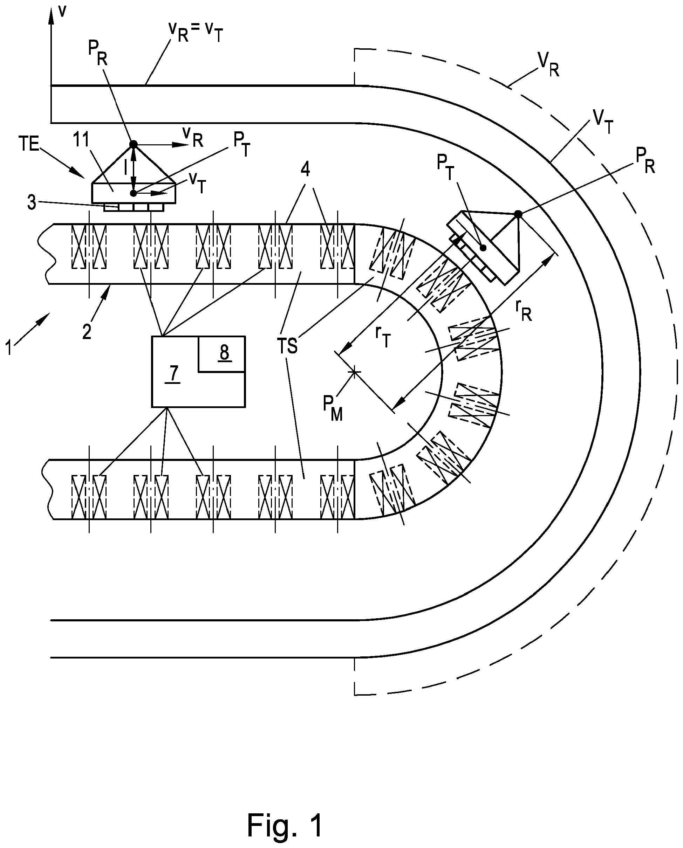

Fig. 1 zeigt den grundlegenden Aufbau einer Transporteinrichtung 1 in Form eines Langstatorlinearmotors mit einer Transporteinheit TE, die in Bewegungsrichtung längs einer Transportstrecke 2 bewegbar ist. In bekannter Weise sind an der Transporteinheit TE Antriebsmagnete 3 angeordnet und an der Transportstrecke sind Antriebsspulen 4 angeordnet. Die Antriebsspulen 4 sind in Längsrichtung (Bewegungsrichtung der Transporteinheit TE) voneinander beabstandet an der Transportstrecke 2 angeordnet und werden in der Regel von einer gemeinsamen Steuerungseinheit 7 angesteuert, um ein bewegtes Magnetfeld zu erzeugen. Das erfolgt beispielsweise durch Einprägen eines Spulenstroms in die Antriebsspulen 4, inspulen 4, indem an die Antriebsspulen 4 eine Spulenspannung angelegt wird. Durch entsprechende Steuerung wird ein bewegtes Magnetfeld in Längsrichtung erzeugt, welches mit den Antriebsmagneten 3 der Transporteinheit TE zur Erzeugung einer auf die Transporteinheit wirkenden Vortriebskraft zusammenwirkt. Die Transportstrecke 2 kann auch aus mehreren Transportsegmenten TS zusammengebaut sein, z.B. aus Geradensegmenten oder Kurvensegmenten, um einen gewünschten Transportstreckenverlauf zu erreichen. Natürlich ist dies nur beispielhaft zu verstehen, es könnten auch noch anders ausgestaltete Transportsegmente TS geben, z.B. Kurveneingangssegmente, deren Krümmung kontinuierlich von einer Krümmung = unendlich (entspricht einem Geradensegment) bis zu einer vorgegebenen Krümmung ansteigt.

Eine Transportstrecke könnte aber auch noch andere Fördereinrichtungen aufweisen wie z.B. Stetigförderer, welche die Transporteinheit TE z.B. auf eine höhere oder niedrigere Ebene befördern. Es könnten auch mehrere Transportabschnitte durch Weichen miteinander verbunden sein, um durch die Weichenstellung eine Transporteinheit entweder auf einen oder auf einen anderen Transportabschnitt zu lenken. Es können auch mehrere Steuerungseinheiten 7 angeordnet werden, z.B. je eine Steuerungseinheit 7 pro Transportsegment TS, welche durch eine (nicht dargestellte) übergeordnete Gesamtsteuerungseinheit verbunden sein können. An der Transportstrecke 2 und/oder an den Transporteinheiten TE können auch nicht dargestellte Führungen angeordnet sein, welche die Transporteinheit TE zuverlässig entlang der Transportstrecke 2 führen, sodass die Transporteinheit TE nicht von der Transportstrecke 2 fallen kann. Die konstruktive Ausgestaltung der Führungen kann z.B. in Form von Rollen oder anderen geeigneten Führungselementen erfolgen.

In der Steuerungseinheit 7 (Hardware und/oder Software) ist üblicherweise eine Regelungseinheit 8 (Hardware und/oder Software) angeordnet, die z.B. in Form eines geeigneten Reglers ausgeführt sein kann. Die Regelungseinheit 8 regelt z.B. ein vorgegebenes Bewegungsprofil der Transporteinheit TE ein, welches z.B. durch einen bestimmten Prozessablauf definiert wird. Dazu erhält die Regelungseinheit 8 in jedem Zeitschritt der Regelung Sollwerte für eine Transporteinheit TE, wie beispielsweise eine Sollposition oder eine Sollgeschwindigkeit, aus denen der Regler entsprechende Stellgrößen, wie beispielsweise einen Spulenstrom oder eine Spulenspannung der an der Bewegung beteiligten Antriebsspulen 4, berechnet. Dazu können der Regelungseinheit 8 natürlich auch noch Istwerte der Transporteinheit TE, wie beispielsweise eine Istposition oder eine Istgeschwindigkeit, vorliegen. Die Istwerte können z.B. mit Positionssensoren entlang der Transportstrecke gemessen werden. Die Sollwerte für die Regelung der Bewegung werden dabei aus dem vorgegebenen, geplanten Bewegungsprofil für die Transporteinheit TE erhalten.

Das Bewegungsprofil der Transporteinheit TE kann im einfachsten Fall aus einer bestimmten Zielposition der Transporteinheit TE entlang der Transportstrecke 2, welche von der Transporteinheit TE zu einem bestimmten Zeitpunkt erreicht werden soll, abgeleitet werden. Daraus kann beispielsweise als Bewegungsprofil ein Weg-Zeit-Profil oder ein Geschwindigkeit-Zeit-Profil berechnet werden. Die Transportstrecke 2 kann auch in Abschnitte unterteilt werden, wobei für jeden Abschnitt ein eigenes Bewegungsprofil vorgegeben werden kann. Solche Profile können aber auch direkt vorgegeben werden, beispielsweise von einer übergeordneten Anlagensteuerungseinheit oder auch von extern, beispielsweise, wenn die Bewegung der Transporteinheit mit einer externen Bewegung, z.B. einer Bearbeitungs- oder Manipulationseinheit (wie ein Roboter) einer Arbeitsstation, synchronisiert werden soll. Bei der Ermittlung oder Vorgabe des Bewegungsprofils können natürlich auch vorgegebene dynamische Grenzen, wie eine maximale Beschleunigung oder ein maximaler Ruck (zeitliche Ableitung der Beschleunigung), berücksichtigt werden.

Je nach Größe und konstruktiver Ausführung der Transporteinrichtung 1 gibt es bestimmte dynamische Transporteinheits-Grenzwerte, die von der Transporteinheit TE nicht überschritten werden können oder dürfen. Beispielsweise kann das eine Maximalgeschwindigkeit v_{Tmax} der Transporteinheit TE sein, die z.B. durch einen maximalen Spulenstrom, eine maximale Spulenspannung oder andere physikalische Grenzen bestimmt ist. Solche dynamischen Transporteinheits-Grenzwerte gilt es bei der Planung des Bewegungsprofils der Transporteinheit TE zu berücksichtigen, vorzugsweise in Form von vorgegebenen Transporteinheits-Zielwerten, wie später noch im Detail erläutert wird. Auf Kurvensegmenten kann aber auch z.B. eine maximale Transporteinheits-Zentrifugalbeschleunigung a_{ZTmax} = r* ω² oder eine maximale Transporteinheits-Zentrifugalkraft F_{ZTmax} = m*r*ω² mit einer Transportmasse m, einem Kurvenradius r und einer Winkelgeschwindigkeit ω maßgebend als dynamischer Transporteinheits-Grenzwert sein, um die auf die Transporteinheit TE wirkenden Kräfte nicht unzulässig hoch werden zu lassen. Über die Beziehung v= ω*r kann daraus eine Maximalgeschwindigkeit v_{Tmax} der Transporteinheit TE am Kurvensegment berechnet werden. Als Transportmasse m kann die Masse der Transporteinheit TE alleine verwendet werden oder eine gesamte Transportmasse m aus der Summe aus der Masse m_{TE} der Transporteinheit TE und einer Masse mo eines von der Transporteinheit TE transportierten Objektes O. Wenn die Masse mo des Objekts ausreichend gering ist, kann diese auch vernachlässigt werden und nur die Masse m_{TE} der Transporteinheit TE berücksichtigt werden.

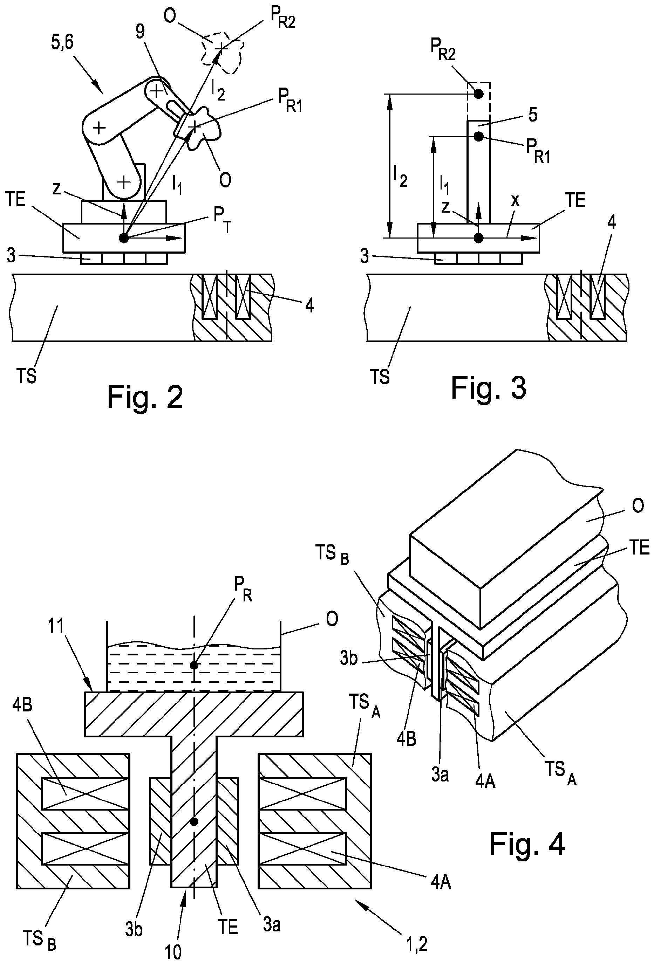

Wenn mit der Transporteinheit TE ein Objekt O transportiert wird, was in der Regel der Fall ist, weist die Transporteinheit TE vorzugsweise auch eine Koppelvorrichtung 5 mit einem Halteelement 9 zum Halten des Objekts O auf, wie beispielhaft in Fig.2 dargestellt ist, wobei die Koppelvorrichtung 5 in Fig.2 als Kinematik 6 (wie beispielsweise ein Roboter) mit mehreren Bewegungsfreiheitsgraden (in Form einer seriellen oder parallelen Kinematik) ausgeführt ist. In diesem Fall wäre zur Transportmasse m auch noch die Masse m_{K} der Koppelvorrichtung 5 zu addieren, wenn diese gegenüber den restlichen Massen nicht vernachlässigt werden kann.

In der Regel wird das Bewegungsprofil der Transporteinheit TE für einen bestimmten Referenzpunkt P_{T} der Transporteinheit TE vorgegeben, z.B. für einen Shuttle-Center-Point, wie einen Schwerpunkt, Mittelpunkt. Die Ausgestaltung der Transporteinrichtung 1 und damit auch der Transporteinheit TE kann allerdings vielfältig sein. Beispielsweise kann die Transporteinheit TE einen im Wesentlichen quaderförmigen Grundkörper 11 aufweisen, so wie in Fig. 1 schematisch dargestellt. Die Transporteinrichtung 1 könnte aber auch so wie in Fig. 4 anhand eines Querschnitts der Transporteinrichtung 1 dargestellt aufgebaut sein.

Die Variante der Transporteinheit in Fig. 4 (links in einer Schnittdarstellung, rechts in einer isometrischen Ansicht) weist einen Grundkörper 11 auf, an dem beidseitig Antriebsmagnete 3a, 3b angeordnet sind. Der Grundkörper 11 ist in diesem Ausführungsbeispiel T-förmig und die Antriebsmagnete 3a, 3b sind am Schenkel 10 angeordnet. Die Antriebsmagnete 3a, 3b wirken in bekannter Weise mit Antriebsspulen 4a, 4b zusammen, welche auf beidseitig des Schenkels 10 der Transporteinheit TE vorgesehenen Teilen der Transportstrecke 2, wie z.B. Transportsegmenten TS_{A}, TS_{B}, angeordnet sind. Daraus ist ersichtlich, dass sich die Transporteinheit TE je nach Ausgestaltung in verschiedenen Richtungen verschieden weit erstrecken kann. Der Referenzpunkt P_{T} der Transporteinheit TE, der zur Festlegung des Bewegungsprofils der Transporteinheit TE verwendet wird, kann demgemäß nicht allgemeingültig definiert werden, sondern hängt auch von der konstruktiven Ausgestaltung der Transporteinheit TE ab. Im Beispiel gemäß Fig. 1 ist der Referenzpunkt P_{T} z.B. der Mittelpunkt des im Wesentlichen quaderförmigen Grundkörpers 11 der Transporteinheit TE. Im Ausführungsbeispiel gemäß Fig.4 ist der Referenzpunkt z.B. am Schenkel 10, zentral zwischen den Antriebsmagneten 3a, 3b gewählt. Für diesen Referenzpunkt P_{T} wird in der Regel das Bewegungsprofil der Transporteinheit TE geplant.

Bei manchen Anwendungen der Transporteinrichtung 1, bei der beispielsweise sensible Objekte O wie Behälter mit Flüssigkeiten, Chemikalien etc. transportiert werden oder das Objekt O eine bestimmte Lage zur Transporteinheit TE einnimmt, kann es gewünscht sein, dass ein bestimmter festgelegter und mit der Transporteinheit TE mitbewegter Relativpunkt P_{R} bestimmte dynamische Relativpunkt-Grenzwerte nicht überschreitet. Dies kann analog zu den dynamischen Transporteinheits-Grenzwerten der Transporteinheit TE z.B. eine maximale Relativpunktgeschwindigkeit v_{Rmax}, eine maximale Relativpunktbeschleunigung a_{Rmax}, eine maximale Relativpunkt-Zentrifugalkraft F_{ZRmax} etc. sein. Der Relativpunkt P_{R} kann dabei am Objekt O liegen, kann aber auch ein anderer interessierender Punkt sein. Um die dynamischen Grenzwerte der Transporteinheit TE nicht zu überschreiten, wird für den Referenzpunkt P_{T} der Transporteinheit TE vorzugsweise zumindest ein sogenannter Transporteinheits-Zielwert vorgegeben und das Bewegungsprofil der Transporteinheit TE wird so festgelegt, dass der Transporteinheits-Zielwert nicht überschritten wird. Analog dazu wird auch für den Relativpunkt P_{R} ein Relativpunkt-Zielwert festgelegt, um bestimmte dynamische Relativpunkt-Grenzwerte nicht zu überschreiten und das Bewegungsprofil der Transporteinheit TE wird so festgelegt, dass der Relativpunkt-Zielwert eingehalten wird. Natürlich ist es auch denkbar, dass sowohl für den Referenzpunkt P_{T}, als auch für den Relativpunkt P_{R} ein oder mehrere Referenzpunkt-Zielwerte bzw. Relativpunkt-Zielwerte festgelegt werden.

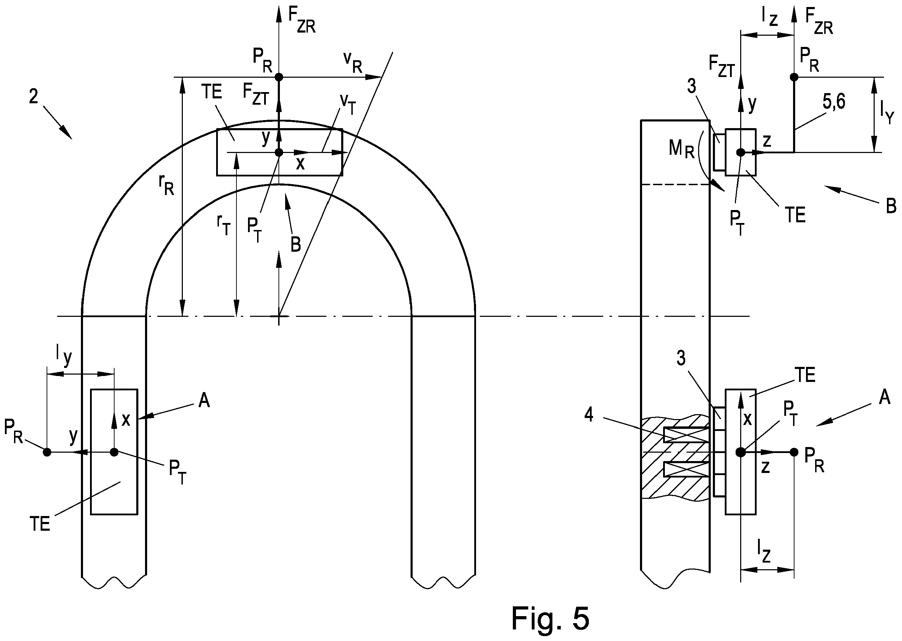

Da das von der Transporteinheit TE transportierte Objekt O in der Regel am Grundkörper 11 der Transporteinheit TE angeordnet ist oder wie beschrieben von einem am Grundkörper 11 angeordneten Halteelement 9 einer Koppelvorrichtung 5 gehalten wird, ist der Relativpunkt P_{R} oftmals in einem räumlichen Relativabstand I vom Referenzpunkt P_{T} der Transporteinheit TE beabstandet, wie in Fig.1 dargestellt. Dieser Relativabstand I ist aber nicht zwingend konstant, sondern kann sich während der Bewegung der Transporteinheit TE auch verändern, beispielsweise wenn der Referenzpunkt P_{T} mit einer Kinematik 6 mit der Transporteinheit TE gekoppelt ist. Je nach Position des Relativpunktes P_{R} im Raum kann der Relativabstand I in Komponenten zerlegt werden, z.B. auf ein mit der Transporteinheit TE mitbewegtes Koordinatensystem mit einer Bewegungsachse X in Bewegungsrichtung der Transporteinheit und einer normal darauf stehenden Querachse Y und einer Hochachse Z, wie anhand Fig.5 dargestellt ist. Wird nun das Bewegungsprofil der Transporteinheit TE in herkömmlicher Weise z.B. unter Einhaltung eines vorgegebenen Transporteinheits-Zielwerts für den Referenzpunkt P_{T} der Transporteinheit TE festgelegt (z.B. einer maximalen Transporteinheits-Geschwindigkeit v_{Tmax} als dynamischem Transporteinheits-Grenzwert ), kann es, insbesondere auf Kurvensegmenten, dazu führen, dass mit diesem Bewegungsprofil maximal zulässige dynamische Relativpunkt-Grenzwerte des Relativpunktes P_{R} überschritten werden (z.B. eine maximale Relativpunkt-Geschwindigkeit v_{Rmax}, wie anhand der Geschwindigkeitsverläufe in Fig.1 näher erläutert wird.

Oberhalb der Transporteinrichtung 1 bzw. radial außerhalb sind die Geschwindigkeitsverläufe für den Referenzpunkt P_{T} der Transporteinheit TE und für den Relativpunkt P_{R} entlang der Transportstrecke 2 dargestellt. Im dargestellten Beispiel ist aus Gründen der Übersichtlichkeit nur der Relativpunkt P_{R} ohne Objekt O oder Koppelvorrichtung 5 dargestellt. Im dargestellten Beispiel wird als Bewegungsprofil der Transporteinheit TE ein konstanter Geschwindigkeitsverlauf v_{T} des Referenzpunktes P_{T} der Transporteinheit TE entlang der Transportstrecke 2 vorgegeben, vorzugsweise unter Einhaltung der dynamischen Transporteinheits-Grenzwerte in Form eines vorgegebenen Transporteinheits-Zielwerts. Es ist ersichtlich, dass die Geschwindigkeit v_{T} auf dem Geradensegment gleich groß ist wie auf dem Kurvensegment. Am Kurvensegment (das hier als Kreisbogen ausgeführt ist) entspricht die Geschwindigkeit v_{T} des Referenzpunktes P_{T} der Transporteinheit TE einer Umfangsgeschwindigkeit eines Kreises mit einem Mittelpunkt P_{M} und einem Referenzradius r_{T}, wie in Fig.1 dargestellt.

Der Relativpunkt P_{R} liegt hier radial weiter außen, in einem Relativradius r_{R} vom Kreismittelpunkt P_{M} entfernt. Der Betrag der Differenz zwischen Referenzradius r_{T} und Relativradius r_{R} entspricht dem Relativabstand I (Betrag, da der Relativpunkt P_{R} auch radial weiter innen liegen könnte als der Referenzpunkt P_{T}). Über den Zusammenhang v_{T} = ω*r_{T} kann die Winkelgeschwindigkeit ω berechnet werden. Da der Relativpunkt P_{R} hier fest mit der Transporteinheit TE verbunden ist, rotiert auch der Relativpunkt P_{R} mit der gleichen Winkelgeschwindigkeit ω wie der Referenzpunkt P_{T} der Transporteinheit TE. Folglich erhält man die (Umfangs-)geschwindigkeit v_{R} für den Relativpunkt P_{R} aus dem Zusammenhang v_{R} = ω*r_{R}. Wie anhand des Geschwindigkeitsverlaufs des Relativpunktes P_{R} ersichtlich, ist die Geschwindigkeit v_{PR} des Relativpunktes P_{R} am Geradensegment gleich der Geschwindigkeit v_{T} des Referenzpunktes der Transporteinheit TE. Aufgrund der rotativen Bewegung der Transporteinheit TE am Kurvensegment ist die (Umfangs-)geschwindigkeit v_{R} (gestrichelte Linie in Fig.1) des Relativpunktes P_{R} am Kurvensegment größer als die (Umfangs-)geschwindigkeit (durchgezogene Linie in Fig.1) des Referenzpunktes P_{T}. Zur Veranschaulichung ist am Übergang vom Geradensegment zum Kurvensegment ein Sprung der Relativpunkt-Geschwindigkeit v_{R} dargestellt. Der Sprung ergibt sich aus der sprunghaften Änderung der Krümmung vom Geradensegment (Krümmung = unendlich) zum Kurvensegment (Krümmung = abhängig vom Kurvenradius). Ein derartiger Sprung ist in der Realität natürlich nicht möglich, weil dafür eine im Wesentlichen unendlich hohe Beschleunigung nötig wäre. Die Beschleunigung a_{T} der Transporteinheit TE ist aber wie beschrieben durch die physikalisch bedingten dynamischen Transporteinheits-Grenzwerte der Transporteinheit TE begrenzt.

Das Bewegungsprofil der Transporteinheit TE wird deshalb durch Vorgabe eines (oder mehrerer) Transporteinheits-Zielwerte vorzugsweise schon so festgelegt, dass die dynamischen Transporteinheits-Grenzwerte nicht erreicht bzw. nicht überschritten werden. Um z.B. einen gleichmäßigen Geschwindigkeitsverlauf zu erreichen, kann vorteilhafterweise auch das erwähnte Kurveneingangssegment verwendet werden, dessen Krümmung kontinuierlich von unendlich auf eine vorgegebene Krümmung des Kurvensegments ansteigt. Aus obigem Zusammenhang (Relativpunkt-(Umfangs-)geschwindigkeit v_{R} > Referenzpunkt-(Umfangs-)geschwindigkeit v_{T} am Kurvensegment) ist ersichtlich, dass auch unter Einhaltung vorgegebener Transporteinheits-Zielwerte wie z.B. dynamischer Transporteinheits-Grenzwerte des Referenzpunktes P_{T} (beispielsweise einer maximalen Referenzpunkt-(Umfangs-)geschwindigkeit v_{T}) die Relativpunkt-(Umfangs-)geschwindigkeit v_{R} höher ist als die Referenzpunkt-(Umfangs-)geschwindigkeit v_{T}, was unter Umständen unerwünscht sein kann. Jedenfalls könnte damit aber unter Umständen eine zulässige Grenzgeschwindigkeit für den Relativpunkt P_{R} überschritten werden, obwohl das Bewegungsprofil der Transporteinheit TE aufgrund der Vorgabe von Transporteinheits-Zielwerten alle vorgegebenen dynamischen Transporteinheits-Grenzwerte einhält.

Erfindungsgemäß wird deshalb das Bewegungsprofil der Transporteinheit TE zumindest abschnittsweise entlang der Transportstrecke 2 in Abhängigkeit eines Relativbewegungsprofils des mit der Transporteinheit TE verbundenen und vom Referenzpunkt P_{T} der Transporteinheit TE im Relativabstand I beabstandeten Relativpunktes P_{R} festgelegt. "Verbunden" bedeutet dabei, dass der Relativpunkt P_{R} mit der Transporteinheit TE mitbewegt wird, dass aber trotzdem eine Relativbewegung zwischen Relativpunkt P_{R} und Transporteinheit TE möglich ist, beispielsweise wenn eine Kinematik 6 an der Transporteinheit TE angeordnet ist, mit der der Relativpunkt P_{R} im Raum relativ zum Referenzpunkt P_{T} der Transporteinheit TE bewegt wird. Abschnittsweise kann z.B. bedeuten, dass dies nur auf kritischen Abschnitten, wie z.B. Kurvenabschnitten, gemacht wird. Da meist ein Objekt O mit der Transporteinheit TE transportiert wird, kann damit in solchen kritischen Abschnitten der Fokus bei der Planung des Bewegungsprofils auf das Objekt O gelegt werden und nicht auf die Transporteinheit TE. Insbesondere bei großen zu transportierenden Massen und/oder großen Relativabständen I ist die Festlegung des Relativbewegungsprofils statt der Festlegung des Bewegungsprofils der Transporteinheit TE vorteilhaft. Ebenso, wenn der Relativpunkt P_{R} während der Bewegung der Transporteinheit TE relativ zur Transporteinheit TE bewegt wird und sich dabei z.B. der Relativabstand I ändert.

Wenn das Relativbewegungsprofil des Relativpunktes P_{R} festgelegt ist, kann über die bekannten geometrischen Verhältnisse auf das Bewegungsprofil des Referenzpunktes P_{T} an der Transporteinheit TE umgerechnet werden, was beispielsweise in der Steuerungseinheit 7 erfolgen kann. Damit kann auch ein schon geplantes Bewegungsprofil der Transporteinheit TE geändert werden, um das gewünschte Relativbewegungsprofil des Relativpunktes P_{R} zu realisieren. Bei bekannten, fest vorgegebenen Prozessabläufen und insbesondere bei (während der Bewegung) festen Relativabständen I ist das Relativbewegungsprofil über die gesamte Transportstrecke 2 oder in den vorgesehenen Abschnitten der Transportstrecke 2 bekannt und damit auch das Bewegungsprofil des Referenzpunktes P_{T} der Transporteinheit TE. Für die Regelung der Bewegung der Transporteinheit TE ändert sich dadurch nichts, da immer anhand des Bewegungsprofils des Referenzpunkts P_{T} an der Transporteinheit TE geregelt werden kann. Im Zuge der Regelung des Bewegungsprofils des Referenzpunktes P_{T} ist es meist erforderlich, die Ist-Position des Referenzpunktes P_{T} wie z.B. des Shuttle-Center-Points, zu ermitteln. Diese Ist-Position des Referenzpunktes P_{T} wird aber in der Regel nicht direkt gemessen, sondern berechnet. Dazu kann beispielsweise eine Ist-Position der Transporteinheit TE mit Positionssensoren entlang der Transportstrecke 2 gemessen werden und über bekannte geometrische Verhältnisse der Transporteinheit TE auf eine Ist-Position des Referenzpunktes P_{T} umgerechnet werden Aus der Ist-Position des Referenzpunktes P_{T} kann danach weiter auf eine Ist-Position des Relativpunktes P_{R} umgerechnet werden. Wenn die Einbauposition und -lage der Positionssensoren bekannt ist, kann beispielsweise eine zweidimensionale oder dreidimensionale Information zur Planung des Bewegungsprofils und/oder des Relativbewegungsprofils generiert werden.

Es ist allerdings vorteilhaft, wenn der Übergang zwischen dem geplanten Bewegungsprofil der Transporteinheit TE und dem anhand des Relativbewegungsprofils des Relativpunktes P_{R} berechneten Bewegungsprofils der Transporteinheit TE als ein kinematisch günstiger Übergang realisiert wird. Beispielsweise ohne Sprünge der Beschleunigung oder des Rucks. Gemäß einer weiteren Ausgestaltung des erfindungsgemäßen Verfahrens muss der Relativabstand I des Relativpunktes P_{R} vom Referenzpunkt P_{T} aber nicht konstant sein, sondern kann während der Bewegung der Transporteinheit TE veränderlich sein. Dabei kann der Relativpunkt P_{R} beispielsweise nur in einer Richtung veränderbar sein, so wie in Fig.3 dargestellt, oder der Relativpunkt P_{R} ist in mehreren Dimensionen veränderbar, sowie in Fig.2, Fig.5 und Fig.6 dargestellt. Bei der Ausführung gemäß Fig.3 ist an der Transporteinheit TE eine Koppelvorrichtung 5 angeordnet, die den Relativpunkt P_{R} aufweist. Die Koppelvorrichtung 5 ist in der Länge veränderbar, sodass sich der Relativabstand I ändert, im dargestellten Beispiel in einer Bewegungsachse von einem Relativabstand I₁ zu einem Relativabstand I₂ in Z-Richtung und umgekehrt. Die Verstellung des Relativabstandes I kann dabei in Stufen oder stufenlos erfolgen.

Natürlich könnte der Relativpunkt P_{R} in Fig.3 auch auf einem nicht dargestellten Halteelement 9 oder einem Objekt O angeordnet sein. Beispielsweise könnte als Relativbewegungsprofil des Relativpunktes P_{R} wiederum eine konstante Geschwindigkeit v_{R} über die gesamte Transportstecke 2 festgelegt werden. Um dies zu gewährleisten, müsste folglich die Geschwindigkeit v_{T} des Referenzpunktes P_{T} der Transporteinheit TE am Kurvensegment verringert werden und/oder der Relativabstand I verringert werden. Wird beispielsweise der Relativabstand I am Kurvensegment erhöht, müsste die Geschwindigkeit v_{T} des Referenzpunktes P_{T} entsprechend weiter verringert werden, um die Randbedingung der konstanten Relativpunkt-Geschwindigkeit v_{R} einzuhalten.

In Fig.2 ist die Koppelvorrichtung 5 als mehrachsige Kinematik 6 ausgeführt, die an der Transporteinheit TE angeordnet ist. An der Kinematik 6 ist ein Halteelement 9 zum Halten eines Objekts O angeordnet, wobei der Relativpunkt P_{R} am Objekt O angeordnet ist. Die Kinematik 6 kann das Objekt O, bezogen auf ein mit der Transporteinheit TE ortsfestes Koordinatensystem, im Wesentlichen beliebig im Raum bewegen, wie hier durch das gestrichelte Objekt O symbolisiert ist. Im gezeigten Beispiel wird der Relativabstand I des am Objekt O angeordneten Relativpunktes P_{R} beispielsweise von einem ersten Relativabstand I₁ des Relativpunktes P_{R1} auf einen zweiten Relativabstand I₂ des zweiten Relativpunktes P_{R2} in der dargestellten X-Z-Ebene verändert.

Diese Bewegung des Relativpunktes P_{R}, bezogen auf die Transporteinheit TE, die bekannt ist, kann natürlich wieder aufgrund der bekannten geometrischen Verhältnisse in ein Relativbewegungsprofil des Relativpunktes P_{R} umgerechnet werden, beispielsweise mittels einer bekannten Rückwärtstransformation ähnlich wie bei einem Roboter. Dieses kann wieder mit den vorgegebenen dynamischen Relativpunkt-Grenzwerten für den Relativpunkt P_{R} durch Vorgabe von Relativpunkt-Zielwerten begrenzt werden, wobei hierzu auch verschiedene Richtungen berücksichtigt werden können. Beispielsweise kann eine Geschwindigkeitskomponente in Bewegungsrichtung (X) und quer dazu (Y, Z) berücksichtigt werden. Das derart begrenzte Relativbewegungsprofil des Relativpunktes P_{R} kann dann wieder auf das Bewegungsprofil des Referenzpunktes P_{T} der Transporteinheit TE umgerechnet werden. Diese Umrechnungen können in der Steuereinheit 7 oder auch in einer übergeordneten Anlagensteuereinheit erfolgen. Das gilt natürlich nicht nur für die dargestellte X-Z-Ebene, sondern beispielsweise auch für eine Bewegung des Relativpunktes P_{R} normal zur dargestellten Ebene, also beispielsweise für eine Kurve die im Wesentlichen aus der dargestellten X-Z-Ebene heraus verläuft.

Im Falle der Kopplung des Relativpunktes P_{R} mit der Transporteinheit TE mittels einer Kinematik 6 kann davon ausgegangen werden, dass die Bewegung der Kinematik 6 von einer Kinematiksteuereinheit gesteuert wird, in der die aktuelle Position eines beliebigen Teils, beispielsweise eines Halteelements 9, bekannt ist oder ermittelt werden kann. Damit kann zu jedem Zeitpunkt auch davon ausgegangen werden, dass die aktuelle Position des Relativpunktes P_{R} bekannt ist oder ermittelt werden kann, woraus auch die Bewegung des Relativpunktes P_{R} bezogen auf die Transporteinheit TE ermittelt werden kann. Damit kann die aktuelle Position des Relativpunktes P_{R} und/oder die Bewegung des Relativpunktes P_{R} relativ zur Transporteinheit TE auch der Steuerungseinheit 7 und/oder einer Anlagensteuereinheit übermittelt werden.

In Fig.5 ist ein weiteres Beispiel einer Transporteinrichtung 1 mit einer Transporteinheit TE mit einem Referenzpunkt P_{T} dargestellt, die entlang einer Transportstrecke 2 bewegt wird. Im Unterschied zur Ausgestaltung in Fig.1 wird die Transporteinheit TE hier in einer gemeinsamen Bewegungsebene entlang der gesamten Transportstrecke 2 bewegt. Entsprechend sind auch die Antriebsspulen 4 angeordnet, um mit den Antriebsmagneten 3 der Transporteinheit TE zusammenzuwirken. Die Ausgestaltung der Transporteinrichtung 1 spielt aber für die Erfindung keine Rolle. An der Transporteinheit TE ist ein mit der Transporteinheit TE verbundener Relativpunkt P_{R} angeordnet. Wie bereits beschrieben, kann der Relativpunkt P_{R} dabei in einem festen Relativabstand I vom Referenzpunkt P_{T} der Transporteinheit TE beabstandet sein, der während der Bewegung der Transporteinheit TE konstant bleibt. Die Relativposition des Relativpunktes P_{R} relativ zum Referenzpunkt P_{T} der Transporteinheit TE ändert sich dann während der Bewegung der Transporteinheit TE nicht.

Der Relativpunkt P_{R} kann aber während der Bewegung der Transporteinheit TE auch beweglich sein, beispielsweise wenn er an einer Kinematik 6 angeordnet ist, wobei sich die Relativposition des Relativpunkts P_{R} im Raum relativ zum Referenzpunkt P_{T} während der Bewegung der Transporteinheit TE ändert. Der Relativabstand I bzw. die Relativposition ist bekannt und wird z.B. von der Kinematiksteuereinheit oder einer geeigneten Messeinrichtung ermittelt. Im dargestellten Beispiel ist der Relativpunkt P_{R} in einem Relativabstand I mit Komponenten I_{Y} und I_{Z} in den beiden Koordinatenachsen Y und Z vom Referenzpunkt P_{R} beabstandet, wobei als Koordinatenursprung hier der Referenzpunkt P_{T} der Transporteinheit TE festgelegt wurde. Grundsätzlich kann ein beliebiges Bezugs-Koordinatensystem verwendet werden, z.B. ein feststehendes Koordinatensystem der Transportstrecke 2 oder, so wie hier, ein mit der Transporteinheit TE mitbewegtes Koordinatensystem. Die Transporteinheit TE ist in einer ersten Position A am Geradesegment und in einer zeitlich späteren zweiten Position B am Kurvensegment dargestellt.

Anhand der zweiten Position B soll veranschaulicht werden, wie sich die Position des Relativpunktes P_{R} auf das Relativbewegungsprofil des Relativpunktes P_{R} und folglich auf das Bewegungsprofil Transporteinheit TE auswirkt. Dabei spielt es keine Rolle, ob der Relativabstand I in der dargestellten zweiten Position B eine Momentaufnahme eines während der Bewegung der Transporteinheit TE bewegten Relativpunktes P_{R} ist, oder ob der Relativabstand fest, also während der Bewegung der Transporteinheit TE konstant ist. Wird die Transporteinheit TE mit einer Transporteinheitsgeschwindigkeit v_{T} bewegt, erfährt der Relativpunkt P_{R}, wie bereits beschrieben, aufgrund des Zusammenhangs der gemeinsamen Winkelgeschwindigkeit ω eine höhere Relativpunktgeschwindigkeit v_{R} bei einer starren Kopplung mit der Transporteinheit TE, z.B. mittels einer starren Koppelvorrichtung 5 (in Fig.5 schematisch). Wenn der Relativpunkt P_{R} an einer beweglichen Kinematik 6 angeordnet ist, beispielsweise an einem Roboter, könnten sich aber auch andere Geschwindigkeitsverhältnisse ergeben, z.B. dann, wenn die Kinematik 6 den Relativpunkt P_{R} in oder entgegen der Bewegungsrichtung der Transporteinheit TE oder quer dazu, relativ zum Referenzpunkt P_{T}, bewegt. Die Geschwindigkeit v_{R} des Relativpunktes P_{R} würde sich dann erhöhen oder verringern, je nach der von der Kinematik 6 erzeugten Geschwindigkeit. Im dargestellten Beispiel wirkt in der zweiten Position B am Kurvensegment eine Transporteinheits-Zentrifugalkraft F_{ZT} = m_{T}*r_{T}*ω² im Referenzpunkt P_{T} auf die Transporteinheit TE und eine Relativpunkt-Zentrifugalkraft F_{ZR} = m_{R}*r_{R}*ω² auf den Relativpunkt P_{R} (z.B. auf ein nicht dargestelltes Objekt O) mit einer Transporteinheitsmasse m_{T} und einer Relativpunktmasse m_{R} (z.B. einer Objektmasse m_{O} eines Objektes O). Die Differenz zwischen dem Referenzpunktradius r_{T} und dem Relativpunktradius r_{R} entspricht der Y-Komponente I_{Y} des Relativabstands I. Wenn die Masse m_{K} der Koppelvorrichtung 5 nicht vernachlässigt werden kann, ist auch noch die Zentrifugalkraft F_{ZK} der Koppelvorrichtung 5 zu berücksichtigen, die vereinfacht z.B. in einem Schwerpunkt der Koppelvorrichtung 5 wirkt. Bei einer beweglichen Kinematik 6 kann es z.B. erforderlich sein, für relativ zueinander bewegte einzelne Komponenten der Kinematik 6 jeweils eine Zentrifugalkraft F_{Zi} zu berücksichtigen. Im vereinfachten Beispiel gemäß Fig.5 wurde jedoch die Masse m_{K} der Koppelvorrichtung 5 vernachlässigt. Aufgrund der Anordnung der Koppelvorrichtung 5 an der Transporteinrichtung TE müssen die Reaktionskräfte, die beispielsweise durch eine Bewegung einer als Kinematik 6 ausgeführten Koppelvorrichtung 5 entstehen, von der Transporteinheit TE aufgenommen werden. Das bedeutet, dass in der zweiten Position B eine Summe aus der Transporteinheits-Zentrifugalkraft F_{ZT} und der Relativpunkt-Zentrifugalkraft F_{ZR} auf die Transporteinheit TE wirkt. Diese Summen-Zentrifugalkraft F_{ZΣ} muss beispielsweise von einer an der Transportstrecke 2 angeordneten (nicht dargestellten) Führung aufgenommen werden. Allgemein gilt für die Summen-Zentrifugalkraft F_{ZΣ} = ΣF_{Zi} mit den zu berücksichtigenden Einzel-Zentrifugalkräften F_{Zi}=mᵢ*rᵢ*ωᵢ² der beteiligten Komponenten (z.B. Objekt O, Koppelvorrichtung 5).

Am Beispiel in Fig.5 ist der Relativpunkt P_{R} in einem Relativabstand I mit der Komponente I_{Z} in Z-Richtung vom Referenzpunkt P_{T} beabstandet (starr oder veränderbar). Durch diese Komponente I_{Z} wird in der zweiten Position B von der Relativpunkt-Zentrifugalkraft F_{ZR} zusätzlich ein Drehmoment M_{T} = F_{ZR}*I_{Z} auf die Transporteinheit TE ausgeübt, welches von der Transporteinheit TE abgestützt und beispielsweise wiederum von der Führung aufgenommen werden muss. In der Regel kann die Führung aber nur begrenzte Kräfte aufnehmen, weshalb es vorteilhaft ist, die auf die Transporteinheit TE während der Bewegung wirkenden Kräfte zu begrenzen. Dazu können wiederum Transporteinheits-Zielwerte festgelegt werden, welche eingehalten werden sollen bzw. insbesondere nicht überschritten werden dürfen. Diese Transporteinheits-Zielwerte können z.B. dynamische Grenzwerte sein wie beispielsweise eine Referenzpunkt-Maximalgeschwindigkeit v_{Tmax}, eine Referenzpunkt-Maximalbeschleunigung a_{Tmax}, in Bewegungsrichtung (hier in X-Richtung) der Transporteinheit (TE) und/oder quer dazu (hier z.B. in Y-Richtung oder in Z-Richtung), eine maximale Transporteinheits-Zentrifugalkraft F_{ZTmax} oder ein Maximaldrehmoment M_{Tmax} sein, die z.B. in der Steuerungseinheit 7 hinterlegt werden. Die Transporteinheits-Zielwerte müssen aber nicht zwangsweise maximal zulässige Grenzwerte sein, sondern können auch beliebig festgelegte Zielwerte sein, die geringer sein können als die maximal zulässigen Grenzwerte. Die Steuerungseinheit 7 prüft dann während der Bewegung der Transporteinheit TE, z.B. in jedem Zeitschritt der Regelung, ob die geforderten Transporteinheits-Zielwerte eingehalten werden, und passt ggf. die Bewegungsgrößen der Transporteinheit TE, wie z.B. die Transporteinheitsgeschwindigkeit v_{T}, an. Das geschieht durch Rückrechnung von einem Relativbewegungsprofil des Relativpunktes P_{R} auf das Bewegungsprofil des Referenzpunktes P_{T} der Transporteinheit TE. Wenn die einzelnen Massen m_{T}, m_{R}, ...mᵢ bekannt sind, können die Kräfte und Drehmomente mit den genannten physikalischen Zusammenhängen und dem bekannten Relativabstand I berechnet werden. Bei unbekannten Massen mᵢ könnten die Kräfte (allgemein Fᵢ) und Drehmomente (allgemein Mᵢ) auch durch geeignete Messeinrichtungen erfasst werden, z.B. durch Dehnmessstreifen.

Neben bestimmten, allfällig vorgegebenen, Transporteinheits-Zielwerten, wie z.B. dynamische Transporteinheits-Grenzwerte, welche die Transporteinheit TE optional einzuhalten hat, gibt es auch Relativpunkt-Zielwerte, welche der Relativpunkt P_{R} einzuhalten hat, beispielsweise dynamische Relativpunkt-Grenzwerte, welche der Relativpunkt P_{R} nicht überschreiten darf oder soll, beispielsweise wenn sensible Objekte O transportiert werden oder aus anderen Gründen. Der Steuerungseinheit 7 werden daher unabhängig von allfällig vorgegebenen Transporteinheits-Zielwerten jedenfalls bestimmte Relativpunkt-Zielwerte vorgegeben, beispielsweise eine Maximalgeschwindigkeit v_{Rmax}, eine Maximalbeschleunigung a_{Rmax} des Relativpunktes P_{R} oder eine maximale Relativpunkt-Zentrifugalkraft F_{ZRmax}. Das ist insbesondere dann vorteilhaft, wenn trotz Einhaltung der Transporteinheits-Zielwerte wie z.B. der dynamischen Transporteinheits-Grenzwerte beispielsweise unzulässig hohe Kräfte auf ein Objekt O im Relativpunkt P_{R} wirken würden. Das zulässige Relativbewegungsprofil wird von der Steuerungseinheit 7 über die bekannten Zusammenhänge auf das Bewegungsprofil der Transporteinheit TE umgerechnet und dann von der Steuerungseinheit 7 so angepasst, dass die Relativpunkt-Zielwerte eingehalten werden. Das kann beispielsweise bedeuten, dass die Transporteinheit TE mit wesentlich geringeren Bewegungsgrößen bewegt wird, als es die dynamischen Transporteinheits-Grenzwerte erlauben würden.

Es kann aber auch sein, dass das Relativbewegungsprofil und folglich auch das Bewegungsprofil des Referenzpunktes P_{T} der Transporteinheit TE nicht im Vorhinein für die gesamte Transportstrecke 2 geplant werden können, beispielsweise dann, wenn die Bewegung des Relativpunktes P_{R} relativ zur Transporteinheit TE nicht vorab bekannt ist. In diesem Fall wäre es z.B. denkbar, ein numerisches Steuerungsverfahren für die Transporteinheit TE zu verwenden, bei dem die Bewegungsgrößen für den Relativpunkt P_{R} und daraus folgend für den Referenzpunkt P_{T} immer nur für den nächsten Zeitschritt der Regelung berechnet werden. Dies kann z.B. von einem geeigneten Regler durchgeführt werden, der z.B. in der Regelungseinheit 8 der Steuerungseinheit 7 integriert sein kann. Solche Verfahren sind im Stand der Technik bekannt, weshalb an dieser Stelle nicht näher darauf eingegangen wird.

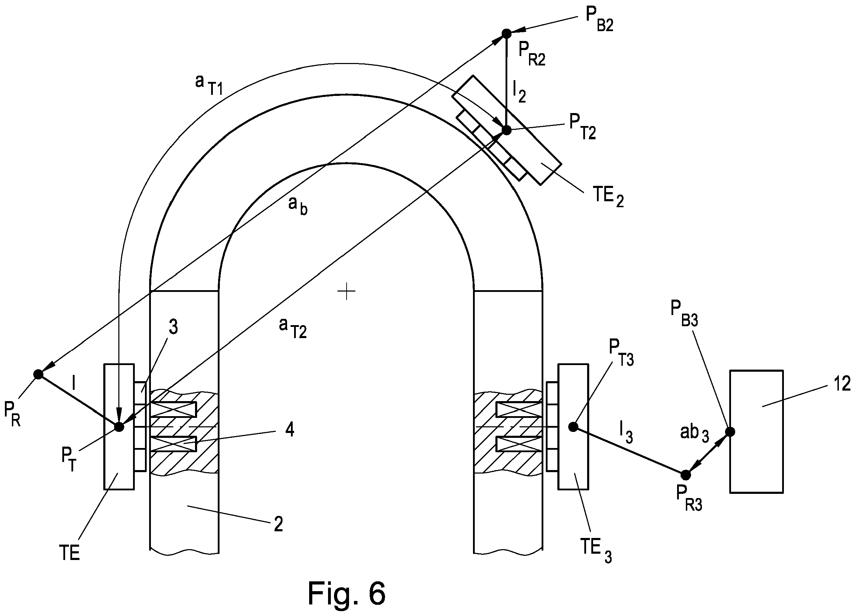

In Fig.6 ist ein weiteres Beispiel einer Transporteinrichtung 1 dargestellt, bei der drei Transporteinheiten TE, TE₂, TE₃ auf der Transportstrecke 2 bewegt werden. Jede Transporteinheit TE, TE₂, TE₃ weist einen Relativpunkt P_{R}, P_{R2}, P_{R3} auf, der mit der jeweiligen Transporteinheit TE, TE₂, TE₃ verbunden ist. Die Verbindung kann wiederum fest sein, sodass sich der Relativabstand Iᵢ zwischen Relativpunkt P_{Ri} und Referenzpunkt P_{Ti} während der Bewegung der Transporteinheiten TEᵢ nicht ändert, oder der Relativabstand Iᵢ kann veränderlich sein, z.B. bei Anordnung auf einer (nicht dargestellten) beweglichen Kinematik 6 (der Index i bezieht sich auf die Transporteinheiten TE-TE₃). Die Transporteinheiten TE-TE₃ sind entlang der Transportstrecke 2 bewegbar, wobei die Bewegungsrichtung durch die Ausgestaltung der Transportstrecke 2 vorgegeben ist. Natürlich kann die Bewegung der Relativpunkte P_{Ri} auch räumlich erfolgen und ist nicht auf die dargestellte Zeichenebene begrenzt.

Erfindungsgemäß können als Transporteinheits-Zielwerte nicht nur dynamische Transporteinheits-Grenzwerte vorgegeben werden, wie z.B. eine maximale Transporteinheits-Geschwindigkeit v_{Tmax} oder eine maximale Transporteinheits-Zentrifugalkraft F_{ZTmax}, sondern auch im Wesentlichen statische Transporteinheits-Zielwerte, die von der Transporteinheit TE einzuhalten sind. Beispielsweise könnte ein Transporteinheitsabstand an in Bewegungsrichtung entlang der Transportstrecke 2 zwischen der Transporteinheit TE und der davor fahrenden zweiten Transporteinheit TE₂ vorgegeben werden, der während der Bewegung der Transporteinheiten TE, TE₂ abschnittsweise oder auf der gesamten Transportstrecke 2 einzuhalten ist. Der Transporteinheitsabstand an kann z.B. der Steuerungseinheit 7 vorgegeben werden, und die Steuerungseinheit 7 berechnet daraus ein entsprechendes Bewegungsprofil für die jeweilige Transporteinheit TEᵢ. Der Transporteinheitsabstand a_{T} muss aber nicht zwangsläufig in Bewegungsrichtung vorgegeben werde, sondern könnte alternativ dazu auch als räumlicher Transporteinheitsabstand a_{T2} vorgesehen werden, was beispielsweise bei einem räumlichen Verlauf der Transportstrecke 2 sinnvoll sein kann.

Analog dazu können auch dem Relativpunkt P_{R} der Transporteinheit TE nicht nur Relativpunkt-Zielwerte in Form von dynamischen Grenzwerten, wie z.B. eine Maximalgeschwindigkeit v_{Rmax} oder eine maximale Relativpunkt-Zentrifugalkraft F_{ZRmax}, vorgegeben werden, sondern es kann auch ein vorgegebener Bezugsabstand a_{B} von einem beweglichen oder ortsfesten Bezugspunkt P_{B} im Raum als Relativpunkt-Zielwert verwendet werden. Als beweglicher Bezugspunkt P_{B} der Transporteinheit TE kann beispielsweise ein zweiter Relativpunkt P_{R2} oder ein zweiter Referenzpunkt P_{T2} einer vor (oder hinter) der Transporteinheit TE fahrenden zweiten Transporteinheit TE₂ verwendet werden. Dies kann insbesondere dann sinnvoll sein, wenn z.B. eine Kinematik 6 an den Transporteinheiten TEi angeordnet ist und vermieden werden soll, dass die Relativpunkte P_{Ri} einander zu nahe kommen oder schlimmstenfalls kollidieren. Durch die Vorgabe von Transporteinheits-Zielwerten und/oder Relativpunkt-Zielwerten können die Bewegungsprofile mehrerer auf der Transportstrecke 2 bewegter Transporteinheiten TEᵢ mit daran angeordneten Relativpunkten P_{Ri} aufeinander abgestimmt werden.

Wenn z.B. zwei Transporteinheiten TE, TE₂ mit starr gekoppelten Relativpunkten P_{R}, P_{R2} (analog der Ausführung in Fig.1) hintereinander auf der Transportstrecke 2 gemäß Fig.1 bewegt werden, kann es gewünscht sein, dass die Relativpunkte P_{R}, P_{R2} einen konstanten Abstand in Bewegungsrichtung aufweisen, welche aufgrund der starren Kopplung im Wesentlichen der Bewegungsrichtung der Transporteinheiten TE mit einem Offset des Relativabstands I entspricht. Am Geradensegment könnten z.B. beide Transporteinheiten TE, TE₂ mit konstanter Geschwindigkeit bewegt werden, um den Abstand zwischen den Relativpunkten P_{R}, P_{R2} konstant zu halten. Wenn die vorne fahrende Transporteinheit TE₂ am Kurvensegment bewegt wird, würde sich bei Beibehaltung der konstanten Geschwindigkeit der Abstand zwischen den Relativpunkten P_{R}, P_{R2} aufgrund der rotativen Bewegung am Kurvensegment erhöhen, was unter Umständen unerwünscht ist. In diesem Fall könnte die Geschwindigkeit der hinteren Transporteinheit TE erhöht werden und/oder die Geschwindigkeit der vorne fahrenden Transporteinheit TE₂ verringert werden oder beides, um einen konstanten Abstand zwischen den Relativpunkten P_{R}, P_{R2} beizubehalten. Vorteilhafterweise werden die jeweiligen Transporteinheits-Zielwerte und die Relativpunkt-Zielwerte eingehalten. Dadurch könnte es beispielsweise sein, dass die hinten fahrende Transporteinheit TE die Geschwindigkeit nicht weiter erhöhen könnte, weil dadurch festgelegte Relativpunkt-Zielwerte des Relativpunkts P_{R} überschritten würden. In diesem Fall wäre es erforderlich, dass die vorne fahrende Transporteinheit TE₂ die Geschwindigkeit verringert.

Es könnte aber auch ein ortsfester Bezugspunkt P_{B3} festgelegt werden, von dem der Relativpunkt P_{R3} der Transporteinheit TE₃ einen vorgegebenen Bezugsabstand a_{B3} einzuhalten hat. Beispielsweise könnte der Bezugspunkt P_{B3}, wie in Fig.6 dargestellt, an einer ortsfesten Konstruktion 12 und der Relativpunkt P_{R3} an einer Kinematik 6 an der Transporteinheit TE angeordnet sein. Wenn die Transporteinheit TE₃ an der ortsfesten Konstruktion 12 vorbeibewegt wird, wird der vorgegebene Bezugsabstand a_{B3} eingehalten, beispielsweise um eine Kollision mit der ortsfesten Konstruktion 6 zu vermeiden. Dazu wird das Relativbewegungsprofil des Relativpunktes P_{R3} entsprechend festgelegt, beispielsweise, indem der Relativabstand I₃ zwischen Relativpunkt P_{R3} und Referenzpunkt P_{T3} im Bereich der ortsfesten Konstruktion 12 reduziert wird, was im Falle einer Kinematik 6 von der Kinematiksteuereinheit durchgeführt werden kann. Beispielsweise könnte das Bewegungsprofil der Transporteinheit TE₃ dazu im Bereich der ortsfesten Konstruktion 12 angepasst werden, beispielsweise durch Reduzierung der Transporteinheits-Geschwindigkeit v_{T}, um der Kinematiksteuereinheit ausreichend Zeit zu geben, die Kinematik 6 anzusteuern, um den Relativabstand I₃ zu reduzieren.

Gemäß einer weiteren Ausgestaltung der Erfindung kann als Relativpunkt-Zielwert des Relativpunktes P_{R} der Transporteinheit TE auch eine Relativkraft F_{R} vorgegeben, die zwischen dem Relativpunkt P_{R} der Transporteinheit TE und einem zweiten Relativpunkt P_{R2} einer (vor oder hinter der Transporteinheit TE bewegten) zweiten Transporteinheit TE₂ wirken soll. Das Bewegungsprofil der Transporteinheit TE und/oder das Bewegungsprofil der zweiten Transporteinheit TE₂ wird dann so festgelegt, dass die zwischen den Relativpunkten P_{R}, P_{R2} wirkende Relativkraft F_{R} eingehalten wird. Es wäre z.B. vorstellbar, dass ein Objekt O mit der zweiten Transporteinheit TE₂ bewegt wird, auf welchem eine bestimmte Komponente montiert werden soll, die mit der Transporteinheit TE transportiert wird. Zur Montage der Komponente am Objekt könnte eine bestimmte Montagekraft F_{M} erforderlich sein, um beispielsweise die Komponente in eine am Objekt O vorgesehene Öffnung einzupressen. Die eizupressende Komponente wird mit der Transporteinheit transportiert, die hinter der zweiten Transporteinheit TE₂ bewegt wird (oder davor, das hängt von der Ausgestaltung des Objektes, der Anordnung der Öffnung und von der Prozessführung ab). Beispielsweise kann die Komponente mittels eines geeigneten Halteelements 9 an einer Koppelvorrichtung 5 an der Transporteinheit TE angeordnet sein. Der Relativpunkt P_{T} der Transporteinheit wäre in diesem Fall z.B. an der Komponente und der zweite Relativpunkt P_{T2} wäre am Objekt, das mit der zweiten Transporteinheit TE₂ transportiert wird, angeordnet, beispielsweise im Bereich der Öffnung.

Um die Komponente in die Öffnung des Objektes O einzuführen wird das Bewegungsprofil der Transporteinheit TE so festgelegt, dass sich die Transporteinheit TE der davor fahrenden zweiten Transporteinheit TE₂ zuerst annähert und bei einem Kontakt zwischen der Komponente und dem Objekt bzw. der Öffnung des Objektes eine festgelegte Relativkraft F_{R} zwischen Komponente und Objekt O erzeugt wird, die vorzugsweise der Montagekraft F_{M} entspricht. Natürlich könnte auch das Bewegungsprofil der zweiten Transporteinheit TE₂ so festgelegt werden, dass die zweite Transporteinheit TE₂ gebremst wird und dadurch der Abstand zur dahinter fahrenden Transporteinheit TE verringert wird oder es können beide Bewegungsprofile beider Transporteinheiten TE, TE₂ angepasst werden. Wenn die Komponente beispielsweise an einer beweglichen Kinematik 6 angeordnet ist, könnte auch ein konstanter Transporteinheits-Abstand a_{T} zwischen den Referenzpunkten P_{T}, P_{T2} als Transporteinheits-Zielwert vorgegeben werden und die Relativkraft F_{R} als vorgegebener Relativpunkt-Zielwert könnte von der Kinematik 6 eingestellt werden, z.B. von der Kinematiksteuereinheit. Zur Erzeugung der Relativkraft F_{R} kann beispielsweise die von den Antriebsspulen 4 und den Antriebsmagneten 3 der Transporteinheit TE erzeugte, auf die Transporteinheit TE wirkende Vortriebskraft erhöht werden, indem der in die Antriebsspulen 4 eingeprägte Spulenstrom erhöht wird.

Es ist ersichtlich, dass damit eine Vielzahl an Kombinationen und Möglichkeiten zur Abstimmung der Relativbewegungsprofile und Bewegungsprofile mehrerer Transporteinheiten TEi aufeinander möglich ist. Zur Ermittlung von Ist-Werten der Transporteinheits-Abstände aₜᵢ und Bezugsabstände a_{Bi} können natürlich wiederum geeignete, nicht dargestellte Messeinrichtungen an der Transporteinrichtung 1 vorgesehen sein. Solche Messeinrichtungen sind im Stand der Technik bekannt und können z.B. in Form von Kamerasystemen oder in der Steuerungseinheit 7 oder der Kinematiksteuereinheit hinterlegten bekannten geometrischen Zusammenhängen sein

## Patentansprüche

1. Verfahren zum Steuern einer Transporteinheit (TE) einer Transporteinrichtung (1) in Form eines Langstatorlinearmotors in Bewegungsrichtung entlang einer Transportstrecke (2) der Transporteinrichtung (1), wobei einer Steuerungseinheit (7) ein Bewegungsprofil der Transporteinheit (TE) für einen definierten Referenzpunkt (P_{T}) der Transporteinheit (TE) vorgegeben wird, mit dem die Transporteinheit (TE) entlang der Transportstrecke (2) bewegt wird, wobei der Steuerungseinheit (7) für einen mit der Transporteinheit (TE) verbundenen und vom Referenzpunkt (P_{T}) der Transporteinheit (TE) beabstandeten Relativpunkt (P_{R}) mit einer bekannten Relativposition relativ zum Referenzpunkt (P_{T}) der Transporteinheit (TE) zumindest abschnittsweise entlang der Transportstrecke (2) ein Relativbewegungsprofil vorgegeben wird und dass die Steuerungseinheit (7) das Bewegungsprofil der Transporteinheit (TE) aus dem Relativbewegungsprofil des Relativpunktes (P_{R}) ermittelt, wobei der Relativpunkt (P_{R}) starr mit der Transporteinheit (TE) verbunden wird oder eine den Relativpunkt (P_{R}) aufweisende Koppelvorrichtung (5) an der Transporteinheit (TE) vorgesehen wird, die eine Kinematik (6) mit zumindest einem Bewegungsfreiheitsgrad für den Relativpunkt (P_{R}) aufweist, **dadurch gekennzeichnet, dass** für den Relativpunkt (P_{R}) zumindest ein Relativpunkt-Zielwert festgelegt wird, wobei die Steuerungseinheit (7) das Bewegungsprofil der Transporteinheit (TE) so festlegt, dass der Relativpunkt-Zielwert eingehalten wird, wobei als Relativpunkt-Zielwert eine Maximalgeschwindigkeit (v_{Rmax}) und/oder eine Maximalbeschleunigung (a_{Rmax}) und/oder eine maximale Relativpunkt-Zentrifugalkraft (FZ_{Rmax}) des Relativpunktes (P_{R}) und/oder ein vorgegebener Bezugsabstand (a_{B}) von einem beweglichen oder ortsfesten Bezugspunkt (P_{B}) im Raum festgelegt wird.

2. Verfahren nach Anspruch 1, **dadurch gekennzeichnet, dass** die Relativposition des Relativpunktes (P_{R}) im Raum relativ zum Referenzpunkt (P_{T}) der Transporteinheit (TE) während der Bewegung der Transporteinheit (TE) durch die Kinematik (6) verändert wird.

3. Verfahren nach Anspruch 1 oder 2, **dadurch gekennzeichnet, dass** an der Koppelvorrichtung (5) zumindest ein Halteelement (9) zum Halten eines Objektes (O) angeordnet wird, wobei der Relativpunkt (P_{R}) am Halteelement (9) oder am Objekt (O) vorgesehen wird.

4. Verfahren nach einem der Ansprüche 1 bis 3, **dadurch gekennzeichnet, dass** als Bewegungsprofil der Transporteinheit (TE) und/oder als Relativbewegungsprofil des Relativpunktes (P_{R}) ein Weg-Zeit-Profil oder eine zeitliche Ableitung davon vorgesehen wird.

5. Verfahren nach einem der Ansprüche 1 bis 4, **dadurch gekennzeichnet, dass** für den Referenzpunkt (PT) der Transporteinheit (TE) zumindest ein Transporteinheits-Zielwert vorgegeben wird, wobei das Bewegungsprofil der Transporteinheit (TE) so festgelegt wird, dass der Transporteinheits-Zielwert eingehalten wird.

6. Verfahren nach Anspruch 5, **dadurch gekennzeichnet, dass** als Transporteinheits-Zielwert eine Maximalgeschwindigkeit v_{Tmax}) und/oder eine Maximalbeschleunigung (a_{Tmax}) des Referenzpunktes (P_{T}) in Bewegungsrichtung der Transporteinheit (TE) und/oder quer dazu festgelegt wird und/oder eine auf die Transporteinheit (TE) wirkende Maximalkraft (Fₘₐₓ), vorzugsweise eine Maximal-Zentrifugalkraft (F_{ZTmax}), und/oder ein Maximaldrehmoment (M_{Tmax}) und/oder ein vorgegebener Transporteinheitsabstand (a_{T}) des Referenzpunktes (P_{T}) von einem zweiten Referenzpunkt (P_{T2}) einer zweiten Transporteinheit (TE2) in Bewegungsrichtung oder im Raum festgelegt wird.

7. Verfahren nach einem der Ansprüche 1 bis 6, **dadurch gekennzeichnet, dass** als beweglicher Bezugspunkt (P_{B}) ein zweiter Relativpunkt (P_{R2}) oder ein zweiter Referenzpunkt (P_{T2}) einer zweiten Transporteinheit (TE₂) verwendet wird.

8. Verfahren nach einem der Ansprüche 1 bis 7, **dadurch gekennzeichnet, dass** als Relativpunkt-Zielwert des Relativpunktes (P_{R}) der Transporteinheit (TE) eine, zwischen dem Relativpunkt (P_{R}) der Transporteinheit (TE) und einem zweiten Relativpunkt (P_{R2}) einer zweiten Transporteinheit (TE₂) wirkende Relativkraft (F_{R}) vorgegeben wird und dass das Bewegungsprofil der Transporteinheit (TE) und/oder das Bewegungsprofil der zweiten Transporteinheit (TE₂) so festgelegt wird, dass die zwischen den Relativpunkten (P_{R}, P_{R2}) wirkende Relativkraft (F_{R}) eingehalten wird.

9. Transporteinrichtung (1) in Form eines Langstatorlinearmotors mit einer Transportstrecke (2), zumindest einer in Längsrichtung entlang der Transportstrecke (2) bewegbaren Transporteinheit (TE) und einer Steuerungseinheit (7) zum Steuern der Transporteinheit (TE), wobei in der Steuerungseinheit (7) zur Steuerung der Bewegung der Transporteinheit (TE) entlang der Transportstrecke (2) ein Bewegungsprofil der Transporteinheit (TE) für einen definierten Referenzpunkt (P_{T}) der Transporteinheit (TE) vorgesehen ist, wobei an der Transporteinheit (TE) ein mit der Transporteinheit (TE) verbundener und vom Referenzpunkt (P_{T}) der Transporteinheit (TE) beabstandeter Relativpunkt (P_{R}) mit einer bekannten Relativposition relativ zum Referenzpunkt (P_{T}) der Transporteinheit (TE) vorgesehen ist, dass in der Steuerungseinheit (7) zumindest abschnittsweise entlang der Transportstrecke (2) ein Relativbewegungsprofil des Relativpunktes (P_{R}) vorgegeben ist und dass die Steuerungseinheit (7) vorgesehen ist, das Bewegungsprofil der Transporteinheit (TE) aus dem Relativbewegungsprofil des Relativpunktes (P_{R}) zu ermitteln, wobei der Relativpunkt (P_{R}) starr mit der Transporteinheit (TE) verbunden ist oder eine den Relativpunkt (P_{R}) aufweisende Koppelvorrichtung (5) an der Transporteinheit (TE) vorgesehen ist, die eine Kinematik (6) mit zumindest einem Bewegungsfreiheitsgrad für den Relativpunkt (P_{R}) aufweist, **dadurch gekennzeichnet, dass** in der Steuerungseinheit (7) für den Relativpunkt (P_{R}) zumindest einen Relativpunkt-Zielwert vorgegeben ist, wobei die Steuerungseinheit (7) vorgesehen ist, das Bewegungsprofil der Transporteinheit (TE) so festzulegen, um den Relativpunkt-Zielwert einzuhalten, wobei als Relativpunkt-Zielwert eine Maximalgeschwindigkeit (v_{Rmax}) und/oder eine Maximalbeschleunigung (a_{Rmax}) und/oder eine maximale Relativpunkt-Zentrifugalkraft (FZ_{Rmax}) des Relativpunktes (P_{R}) und/oder ein vorgegebener Bezugsabstand (a_{B}) von einem beweglichen oder ortsfesten Bezugspunkt (P_{B}) im Raum vorgegeben ist.

10. Transporteinrichtung (1) nach Anspruch 9, **dadurch gekennzeichnet, dass** die Relativposition des Relativpunktes (P_{R}) im Raum relativ zum Referenzpunkt (P_{T}) der Transporteinheit (TE) während der Bewegung der Transporteinheit (TE) veränderlich ist.

11. Transporteinrichtung (1) nach Anspruch 9 oder 10, **dadurch gekennzeichnet, dass** an der Koppelvorrichtung (5) zumindest ein Halteelement (9) zum Halten eines Objektes (O) vorgesehen ist, wobei der Relativpunkt (P_{R}) am Halteelement (9) oder am Objekt (O) vorgesehen ist.

12. Transporteinrichtung (1) nach einem der Ansprüche 9 bis 11, **dadurch gekennzeichnet, dass** als Bewegungsprofil der Transporteinheit (TE) und/oder als Relativbewegungsprofils des Relativpunktes (P_{R}) ein Weg-Zeit-Profil oder eine zeitliche Ableitung davon vorgesehen ist.

13. Transporteinrichtung (1) nach einem der Ansprüche 9 bis 12, **dadurch gekennzeichnet, dass** in der Steuerungseinheit (7) für den für den Referenzpunkt (PT) der Transporteinheit (TE) zumindest einen Transporteinheits-Zielwert vorgegeben ist, wobei die Steuerungseinheit (7) vorgesehen ist, das Bewegungsprofil der Transporteinheit (TE) festzulegen, um den Transporteinheits-Zielwert einzuhalten.

14. Transporteinrichtung (1) nach Anspruch 13, **dadurch gekennzeichnet, dass** als Transporteinheits-Zielwert eine Maximalgeschwindigkeit (v_{Tmax}) und/oder eine Maximalbeschleunigung (a_{Tmax}) des Referenzpunktes (P_{T}) in Bewegungsrichtung der Transporteinheit (TE) und/oder quer dazu und/oder eine auf die Transporteinheit (TE) wirkende Maximalkraft (Fₘₐₓ), vorzugsweise eine Maximal-Zentrifugalkraft (F_{ZTmax}), und/oder ein Maximaldrehmoment (M_{Tmax}) und/oder ein vorgegebener Transporteinheitsabstand (a_{T}) des Referenzpunktes (P_{T}) von einem zweiten Referenzpunkt (P_{T2}) einer zweiten Transporteinheit (TE2) in Bewegungsrichtung oder im Raum vorgegeben ist.

15. Transporteinrichtung (1) nach einem der Ansprüche 9 bis 14, **dadurch gekennzeichnet, dass** der bewegliche Bezugspunkt (P_{B}) ein zweiter Relativpunkt (PR₂) oder ein zweiter Referenzpunkt (P_{T2}) einer zweiten Transporteinheit (T_{E2}) ist und/oder dass als Relativpunkt-Zielwert eine, zwischen dem Relativpunkt (P_{R}) der Transporteinheit (TE) und einem zweiten Relativpunkt (P_{R2}) einer zweiten Transporteinheit (TE₂) wirkende Relativkraft(F_{R}) vorgegeben ist, wobei das Bewegungsprofil der Transporteinheit (TE) und/oder das Bewegungsprofil der zweiten Transporteinheit (TE₂) von der Steuerungseinheit (7) festgelegt ist, um die zwischen den Relativpunkten (P_{R}, P_{R2}) wirkende Relativkraft (F_{R}) einzuhalten.

## Claims

1. A method for controlling a transport unit (TE) of a transport device (1) in the form of a long-stator linear motor in direction of movement along a transport path (2) of the transport device (1), wherein a movement profile of the transport unit (TE) by which the transport unit (TE) is moved along the transport path (2) is predetermined for a control unit (7) for a defined reference point (P_{T}) of the transport unit (TE), wherein for the control unit (7) a relative movement profile is predetermined for a relative point (P_{R}) connected to the transport unit (TE) and spaced from the reference point (P_{T}) of the transport unit (TE) with a known relative position relative to the reference point (P_{T}) of the transport unit (TE) at least in sections along the transport path (2), and in that the control unit (7) determines the movement profile of the transport unit (TE) from the relative movement profile of the relative point (P_{R}), wherein the relative point (P_{R}) is rigidly connected to the transport unit (TE) or a coupling device (5) comprising the relative point (P_{R}) is provided on the transport unit (TE), the coupling device (5) comprising kinematics (6) with at least one degree of freedom of movement for the relative point (P_{R}), **characterized in that** at least one relative point target value is defined for the relative point (PR), the movement profile of the transport unit (TE) being determined by the control unit (7) such that the relative point target value is adhered to, wherein the relative point target value is a maximum speed (v_{Rmax}) and/or a maximum acceleration (a_{Rmax}) and/or a maximum relative point centrifugal force (F_{ZRmax}) of the relative point (P_{R}) and/or a predetermined reference distance (a_{B}) from a movable or fixed reference point (P_{B}) in space.

2. The method according to claim 1, **characterized in that** the relative position of the relative point (P_{R}) in space relative to the reference point (P_{T}) of the transport unit (TE) is changed by the kinematics (6) during the movement of the transport unit (TE).

3. The method according to claim 1 or 2, **characterized in that** at least one holding element (9) for holding an object (O) is arranged on the coupling device (5), the relative point (P_{R}) being provided on the holding element (9) or on the object (O).

4. The method according to any of claims 1 to 3, **characterized in that** a path-time profile or a time derivative thereof is provided as the movement profile of the transport unit (TE) and/or as the relative movement profile of the relative point (P_{R}).

5. The method according to one of claims 1 to 4, **characterized in that** at least one transport unit target value is predetermined for the reference point (PT) of the transport unit (TE), the movement profile of the transport unit (TE) being determined in such a way that the transport unit target value is adhered to.

6. The method according to claim 5, **characterized in that** the transport unit target value is a maximum speed (v_{Tmax}) and/or a maximum acceleration (a-rmax) of the reference point (P_{T}) in the direction of movement of the transport unit (TE) and/or transversely thereto and/or a maximum force (Fₘₐₓ) acting on the transport unit (TE), preferably a maximum centrifugal force (FzTmax), and/or a maximum torque (M_{Tmax}) and/or a predetermined transport unit distance (a_{T}) of the reference point (P_{T}) from a second reference point (P_{T2}) of a second transport unit (TE2) in the direction of movement or in space.

7. The method according to any of claims 1 to 6, **characterized in that** a second relative point (P_{R2}) or a second reference point (P_{T2}) of a second transport unit (TE₂) is used as the movable reference point (P_{B}).

8. The method according to any of claims 1 to 7, **characterized in that** a relative force (F_{R}) acting between the relative point (P_{R}) of the transport unit (TE) and a second relative point (P_{R2}) of a second transport unit (TE₂) is predetermined as the relative point target value of the relative point (P_{R}) of the transport unit (TE), and **in that** the movement profile of the transport unit (TE) and/or the movement profile of the second transport unit (TE₂) is determined such that the relative force (F_{R}) acting between the relative points (P_{R}, P_{R2}) is adhered to.

9. A transport device (1) in the form of a long-stator linear motor with a transport path (2), at least one transport unit (TE) that is movable in the longitudinal direction along the transport path (2) and a control unit (7) for controlling the transport unit (TE), wherein in the control unit (7) for controlling the movement of the transport unit (TE) along the transport path (2) a movement profile of the transport unit (TE) is provided for a defined reference point (P_{T}) of the transport unit (TE), wherein a relative point (P_{R}) connected to the transport unit (TE) and spaced from the reference point (P_{T}) of the transport unit (TE) with a known relative position relative to the reference point (P_{T}) of the transport unit (TE) is provided on the transport unit (TE), in that a relative movement profile of the relative point (PR) is predetermined in the control unit (7) at least in sections along the transport path (2), and in that the control unit (7) is configured to determine the movement profile of the transport unit (TE) from the relative movement profile of the relative point (P_{R}), wherein the relative point (P_{R}) is rigidly connected to the transport unit (TE) or a coupling device (5) comprising the relative point (P_{R}) is provided on the transport unit (TE), the coupling device (5) comprising kinematics with at least one degree of freedom of movement for the relative point (P_{R}), **characterized in that** at least one relative point target value is predetermined in the control unit (7) for the relative point (P_{R}), wherein the control unit (7) is configured for determining the movement profile of the transport unit (TE) in order to adhere to the relative point target value, wherein the relative point target value is a maximum speed (v_{Rmax}) and/or a maximum acceleration (a_{Rmax}) and/or a maximum relative point centrifugal force (Fz_{Rmax}) of the relative point (P_{R}) and/or a predetermined reference distance (a_{B}) from a movable or fixed reference point (P_{B}) in space.

10. The transport device (1) according to claim 9, **characterized in that** the relative position of the relative point (P_{R}) in space relative to the reference point (P_{T}) of the transport unit (TE) is changeable during the movement of the transport unit (TE).

11. The transport device (1) according to claim 9 or 10, **characterized in that** at least one holding element (9) for holding an object (O) is provided on the coupling device (5), the relative point (P_{R}) being provided on the holding element (9) or on the object (O).

12. The transport device (1) according to any of claims 9 to 11, **characterized in that** a path-time profile or a time derivative thereof is provided as the movement profile of the transport unit (TE) and/or as the relative movement profile of the relative point (P_{R}).

13. The transport device (1) according to any of claims 9 to 12, **characterized in that** at least one transport unit target value is predetermined in the control unit (7) for the reference point (PT) of the transport unit (TE), wherein the control unit (7) is configured for determining the movement profile of the transport unit (TE) in order to adhere to the transport unit target value.

14. The transport device (1) according to claim 13, **characterized in that** the transport unit target value is a maximum speed (v_{Tmax}) and/or a maximum acceleration (a-rmax) of the reference point (P_{T}) in the direction of movement of the transport unit (TE) and/or transversely thereto and/or a maximum force (Fₘₐₓ) acting on the transport unit (TE), preferably a maximum centrifugal force (F_{ZTmax}), and/or a maximum torque (M_{Tmax}) and/or a predetermined transport unit distance (a_{T}) of the reference point (P_{T}) from a second reference point (P_{T2}) of a second transport unit (TE2) in the direction of movement or in space.

15. The transport device (1) according to any of claims 9 to 14, **characterized in that** the movable reference point (P_{B}) is a second relative point (PR₂) or a second reference point (PT₂) of a second transport unit (TE₂) and/or **in that** a relative force (F_{R}) acting between the relative point (P_{R}) of the transport unit (TE) and a second relative point (P_{R2}) of a second transport unit (TE₂) is predetermined as the relative point target value, wherein the movement profile of the transport unit (TE) and/or the movement profile of the second transport unit (TE₂) is determined by the control unit (7) in order to adhere to the relative force (F_{R}) acting between the relative points (P_{R}, P_{R2}).

## Revendications

1. Procédé permettant la commande d'une unité de transport (TE) d'un dispositif de transport (1) sous la forme d'un moteur linéaire à stator long dans un sens de déplacement le long d'une voie de transport (2) du dispositif de transport (1), un profil de mouvement de l'unité de transport (TE) pour un point de référence (P_{T}) défini de l'unité de transport (TE) étant donné par une unité de commande (7), au moyen duquel profil de mouvement l'unité de transport (TE) est déplacée le long de la voie de transport (2), un profil de mouvement relatif pour un point relatif (P_{R}) comportant une position relative connue par rapport au point de référence (P_{T}) de l'unité de transport (TE), relié à l'unité de transport (TE) et espacé du point de référence (P_{T}) de l'unité de transport (TE), étant donné à l'unité de commande (7), au moins dans certaines régions le long de la voie de transport (2), et l'unité de commande (7) déterminant le profil de mouvement de l'unité de transport (TE) à partir du profil de mouvement relatif du point relatif (P_{R}), le point relatif (P_{R}) étant relié rigidement à l'unité de transport (TE) ou un dispositif d'accouplement (5) présentant le point relatif (P_{R}) étant prévu sur l'unité de transport (TE) et présentant une cinématique (6) comportant au moins un degré de liberté de mouvement pour le point relatif (P_{R}), **caractérisé en ce qu'**au moins une valeur cible de point relatif est spécifiée pour le point relatif (P_{R}), l'unité de commande (7) spécifiant le profil de mouvement de l'unité de transport (TE) de telle manière que la valeur cible de point relatif est respectée, une vitesse maximale (v_{Rmax}) et/ou une accélération maximale (a_{Rmax}) et/ou une force centrifuge de point relatif maximale (FZ_{Rmax}) du point relatif (P_{R}) et/ou une distance de relation donnée (a_{B}) par rapport à un point de relation (P_{B}) mobile ou fixe dans l'espace étant spécifiées comme valeur cible de point relatif.

2. Procédé selon la revendication 1, **caractérisé en ce que** la position relative du point relatif (P_{R}) dans l'espace par rapport au point de référence (P_{T}) de l'unité de transport (TE) est modifiée par la cinématique (6) lors du déplacement de l'unité de transport (TE).

3. Procédé selon la revendication 1 ou 2, **caractérisé en ce qu'**au moins un élément de maintien (9) permettant de maintenir un objet (O) est disposé sur le dispositif d'accouplement (5), le point relatif (P_{R}) étant prévu sur l'élément de maintien (9) ou sur l'objet (O).

4. Procédé selon l'une des revendications 1 à 3, **caractérisé en ce qu'**un profil distance-temps ou une dérivée temporelle de celui-ci est prévu comme profil de mouvement de l'unité de transport (TE) et/ou comme profil de mouvement relatif du point relatif (P_{R}).

5. Procédé selon l'une des revendications 1 à 4, **caractérisé en ce qu'**au moins une valeur cible d'unité de transport est donnée pour le point de référence (PT) de l'unité de transport (TE), le profil de mouvement de l'unité de transport (TE) étant spécifié de sorte que la valeur cible d'unité de transport est respectée.

6. Procédé selon la revendication 5, **caractérisé en ce qu'**une vitesse maximale (V_{Tmax}) et/ou une accélération maximale (a_{Tmax}) du point de référence (P_{T}) dans le sens de déplacement de l'unité de transport (TE) et/ou transversalement à celui-ci sont spécifiées comme la valeur cible d'unité de transport et/ou une force maximale (Fₘₐₓ) agissant sur l'unité de transport (TE), de préférence une force centrifuge maximale (F_{ZTmax}), et/ou un couple maximal (M_{Tmax}) et/ou une distance d'unité de transport prédéfinie (a_{T}) du point de référence (P_{T}) par rapport à un second point de référence (P_{T2}) d'une second unité de transport (TE2) dans le sens du déplacement ou dans l'espace sont spécifiés.

7. Procédé selon l'une des revendications 1 à 6, **caractérisé en ce qu'**un second point relatif (P_{R2}) ou un second point de référence (P_{T2}) d'une seconde unité de transport (TE₂) est utilisé comme point de relation (P_{B}) mobile.

8. Procédé selon l'une des revendications 1 à 7, **caractérisé en ce qu'**une force relative (F_{R}) agissant entre le point relatif (P_{R}) de l'unité de transport (TE) et un second point relatif (P_{R2}) d'une seconde unité de transport (TE₂) est spécifiée comme la valeur cible de point relatif du point relatif (P_{R}) de l'unité de transport (TE) et **en ce que** le profil de mouvement de l'unité de transport (TE) et/ou le profil de mouvement de la seconde unité de transport (TE₂) sont spécifiés de sorte que la force relative (F_{R}) agissant entre les points relatifs (P_{R}, P_{R2}) est respectée.

9. Dispositif de transport (1) sous la forme d'un moteur linéaire à stator long comportant une voie de transport (2), au moins une unité de transport (TE) pouvant être déplacée dans le sens longitudinal le long de la voie de transport (2) et une unité de commande (7) permettant de commander l'unité de transport (TE), un profil de mouvement de l'unité de transport (TE) pour un point de référence (P_{T}) défini de l'unité de transport (TE) étant prévu dans l'unité de commande (7) pour commander le mouvement de l'unité de transport (TE) le long de la voie de transport (2), un point relatif (P_{R}) comportant une position relative connue par rapport au point de référence (P_{T}) de l'unité de transport (TE), relié à l'unité de transport (TE) et espacé du point de référence (P_{T}) de l'unité de transport (TE), étant prévu au niveau de l'unité de transport (TE), un profil de mouvement relatif du point relatif (P_{R}) étant prévu dans l'unité de commande (7), au moins dans certaines régions le long de la voie de transport (2), et l'unité de commande (7) étant prévue pour déterminer le profil de mouvement de l'unité de transport (TE) à partir du profil de mouvement relatif du point relatif (P_{R}), le point relatif (P_{R}) étant relié rigidement à l'unité de transport (TE) ou un dispositif d'accouplement (5) présentant le point relatif (P_{R}) étant prévu sur l'unité de transport (TE), lequel présente une cinématique (6) comportant au moins un degré de liberté de mouvement pour le point relatif (P_{R}), **caractérisé en ce qu'**au moins une valeur cible de point relatif est donnée dans l'unité de commande (7) pour le point relatif (P_{R}), l'unité de commande (7) étant prévue pour spécifier le profil de mouvement de l'unité de transport (TE) de manière à respecter la valeur cible de point relatif, une vitesse maximale (v_{Rmax}) et/ou une accélération maximale (a_{Rmax}) et/ou une force centrifuge de point relatif maximale (FZ_{Rmax}) du point relatif (P_{R}) et/ou une distance de relation donnée (a_{B}) par rapport à un point de relation (P_{B}) mobile ou fixe dans l'espace étant donnée comme valeur cible de point relatif.

10. Dispositif de transport (1) selon la revendication 9, **caractérisé en ce que** la position relative du point relatif (P_{R}) dans l'espace par rapport au point de référence (P_{T}) de l'unité de transport (TE) est variable lors du déplacement de l'unité de transport (TE).

11. Dispositif de transport (1) selon la revendication 9 ou 10, **caractérisé en ce qu'**au moins un élément de maintien (9) permettant de maintenir un objet (O) est prévu sur le dispositif d'accouplement (5), le point relatif (P_{R}) étant prévu sur l'élément de maintien (9) ou sur l'objet (O).

12. Dispositif de transport (1) selon l'une des revendications 9 à 11, **caractérisé en ce qu'**un profil distance-temps ou une dérivée temporelle de celui-ci est prévu comme profil de mouvement de l'unité de transport (TE) et/ou comme profil de mouvement relatif du point relatif (P_{R}).

13. Dispositif de transport (1) selon l'une des revendications 9 à 12, **caractérisé en ce qu'**au moins une valeur cible d'unité de transport est donnée dans l'unité de commande (7) pour le point de référence (PT) de l'unité de transport (TE), l'unité de commande (7) étant prévue pour spécifier le profil de mouvement de l'unité de transport (TE) afin de respecter la valeur cible d'unité de transport.

14. Dispositif de transport (1) selon la revendication 13, **caractérisé en ce qu'**une vitesse maximale (V_{Tmax}) et/ou une accélération maximale (a-rmax) du point de référence (P_{T}) dans le sens de déplacement de l'unité de transport (TE) et/ou transversalement à celui-ci et/ou une force maximale (Fₘₐₓ) agissant sur l'unité de transport (TE), de préférence une force centrifuge maximale (F_{ZTmax}), et/ou un couple maximal (M_{Tmax}) et/ou une distance d'unité de transport donnée (aT) du point de référence (P_{T}) par rapport à un second point de référence (P_{T2}) d'une seconde unité de transport (TE2) sont donnés comme valeur cible d'unité de transport dans le sens de déplacement ou dans l'espace.

15. Dispositif de transport (1) selon l'une des revendications 9 à 14, **caractérisé en ce que** le point de relation (P_{B}) mobile est un second point relatif (PR₂) ou un second point de référence (P_{T2}) d'une seconde unité de transport (T_{E2}) et/ou **en ce qu'**une force relative (F_{R}) agissant entre le point relatif (P_{R}) de l'unité de transport (TE) et un second point relatif (P_{R2}) d'une seconde unité de transport (TE₂) est spécifiée comme la valeur cible de point relatif, le profil de mouvement de l'unité de transport (TE) et/ou le profil de mouvement de la seconde unité de transport (TE₂) étant spécifiés par l'unité de commande (7) afin de respecter la force relative (F_{R}) agissant entre les points relatifs (P_{R}, P_{R2}).
